(19) Europäisches Patentamt
European Patent Office
Office européen des brevets

(11) **EP 2 377 409 B1**

(12) **EUROPEAN PATENT SPECIFICATION**

(45) Date of publication and mention
of the grant of the patent:
**13.06.2018 Bulletin 2018/24**

(51) Int Cl.:
*A23L 2/02* (2006.01)        *A23L 2/56* (2006.01)
*C12F 3/06* (2006.01)        *A23L 27/20* (2016.01)
*A23L 27/21* (2016.01)       *A23L 27/24* (2016.01)
*A23L 27/29* (2016.01)       *A23L 33/105* (2016.01)

(21) Application number: **09833146.5**

(22) Date of filing: **04.12.2009**

(86) International application number:
**PCT/JP2009/006636**

(87) International publication number:
**WO 2010/070836 (24.06.2010 Gazette 2010/25)**

(54) **METHOD FOR PRODUCING A SOFT DRINK**

HERSTELLUNGSVERFAHREN EINES ALKOHOLFREIEN GETRÄNKS

MÉTHODE DE PRODUCTION D'UNE BOISSON SANS ALCOOL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.12.2008 JP 2008322873**

(43) Date of publication of application:
**19.10.2011 Bulletin 2011/42**

(73) Proprietor: **MERCIAN CORPORATION
Chuo-ku
Tokyo 104-8305 (JP)**

(72) Inventors:
 • **TAKASE, Hideki**
   **Tokyo 104-8305 (JP)**
 • **OHASHI, Hiroyuki**
   **Tokyo 104-8305 (JP)**
 • **OKOSHI, Takashi**
   **Tokyo 104-8305 (JP)**
 • **KOBAYASHI, Hironori**
   **Tokyo 104-8305 (JP)**
 • **TAKATA, Ryoji**
   **Tokyo 104-8305 (JP)**
 • **KON-NO, Tomonori**
   **Tokyo 104-8305 (JP)**

(74) Representative: **Zimmermann & Partner
Patentanwälte mbB
Postfach 330 920
80069 München (DE)**

(56) References cited:
    WO-A1-2007/095682      JP-A- 2 312 581
    JP-A- 59 098 672       JP-A- 2000 069 945
    JP-A- 2002 136 259     JP-A- 2005 192 562
    JP-A- 2008 101 097

 • **PEYROT DES GACHONS C ET AL: "Localization
   of S-cysteine conjugates in the berry: effect of
   skin contact on aromatic potential of Vitisvinifera
   L. cv. Sauvignon Blanc must", AMERICAN
   JOURNAL OF ENOLOGY AND VITICULTURE,
   AMERICAN SOCIETY FOR ENOLOGY AND
   VITICULTURE, US, vol. 53, no. 2, 1 January 2002
   (2002-01-01), pages 144-146, XP008150829, ISSN:
   0002-9254**
 • **MAGGU M ET AL.: 'Effect of skin contact and
   pressure on the composition of Sauvignon Blanc
   must' J. AGRIC. FOOD CHEM. vol. 55, no. 25,
   2007, pages 10281 - 10288**
 • **STARKENMANN C ET AL.: 'Olfactory perception
   of cysteine-S-conjugates from fruits and
   vegetables' J. AGRIC. FOOD CHEM. vol. 56, no.
   20, 22 October 2008, pages 9575 - 9580**
 • **NORIYOSHI MASUOKA ET AL.: 'Pione Hibu o
   Tsukatta Juice no Kenko eno Eikyo' THE
   BULLETIN OF THE OKAYAMA UNIVERSITY OF
   SCIENCE 2007, pages 33 - 39**
 • **MASAO TSUJI ET AL.: 'Chiiki Nosanbutsu ni yoru
   Kinosei Shokuhin no Kaihatsu' HEISEI 13 NENDO
   REPORT OF THE YAMANASHI INDUSTRIAL
   TECHNOLOGY CENTER 01 August 2002, pages
   28 - 31**

**(Cont. next page)**

EP 2 377 409 B1

- **KIYOKO YOSHIDA: 'Kudamono o Jozu ni Taberu 3 Budo' KAJITSU NIPPON vol. 54, no. 9, 1999, pages 66 - 67**
- **TAKATOSHI TOMINAGA ET AL.: 'Non-Aromatic Hinshu Wine no Koki Seibun to sono Seisei Kiko Kenkyu no Genjo' JOURNAL OF THE BREWING SOCIETY OF JAPAN vol. 98, no. 9, 2003, pages 628 - 637**
- **MURAT ML ET AL.: 'Assessing the aromatic potential of Cabernet Sauvignon and Merlot musts used to produce rose wine by assaying the cysteinylated precursor of 3-mercaptohexan-l-ol' J. AGRIC. FOOD CHEM. vol. 49, no. LL, 2001, pages 5412 - 5417**
- **PEYROT C ET AL.: 'Sulfur aroma precursor present in S-glutathione conjugate form: identification of S-3-(hexan-1-ol)-glutathione in must from Vitis vinifera L. cv. Sauvignon blanc' J. AGRIC. FOOD CHEM. vol. 50, no. 14, 2002, pages 4076 - 4079**
- **SWIEGERS JH ET AL.: 'The influence of yeast on the aroma of Sauvignon Blanc wine' FOOD MICROBIOL. vol. 26, no. 2, April 2009, pages 204 - 211**
- **SUBILEAU M ET AL.: 'New insights on 3-mercaptohexanol (3MH) biogenesis in Sauvignon Blanc wines: Cys-3MH and (E)-hexen-2-al are not the major precursors' J. AGRIC. FOOD CHEM. vol. 56, no. 19, 08 October 2008, pages 9230 - 9235**
- **SARRAZIN E ET AL.: 'dorous impact of volatile thiols on the aroma of young botrytized sweet wines: identification and quantification of new sulfanyl alcohols' J. AGRIC. FOOD CHEM. vol. 55, no. 4, 2007, pages 1437 - 1444**
- **SWIEGER JH ET AL.: 'Engineering volatile thiol release in Saccharomyces cerevisiae for improved wine aroma' YEAST vol. 24, no. 7, 2007, pages 561 - 574**
- **HIRONORI KOBAYASHI ET AL.: 'Koshu Wine no Atarashii Kaori Budo 'Koshu' kara no Message' BIOSCIENCE & INDUSTRY vol. 64, no. 4, 01 April 2006, pages 226 - 227**
- **HIRONORI KOBAYASHI ET AL.: 'Koshu Kiiroka ni Miru Wine no Koseika Jozoho' SEIBUTSU KOGAKU vol. 86, 25 July 2008, pages 366 - 367**
- **YASUHIRO OKANO ET AL.: 'Bdo Kahi Zansa kara no Nyusan Seizo' JOURNAL OF ASEV JAPAN vol. 17, no. 3, 25 November 2006, pages 145 - 146**
- **DATABASE WPI Week 199115 Thomson Scientific, London, GB; AN 1991-108097 XP002674081, & SU 1 584 888 A (GEOR FOOD IND RES) 15 August 1990 (1990-08-15)**

**Description**

**[Technical Field]**

The present invention relates to a method of preparation of a soft drink having both an excellent fruity aroma and a fruity afteraroma once swallowed.

**[Background Art]**

In the course of wine tasting, aromas are expressed with various terms derived from plants, vegetables, fruits, animals, and the like, and different words are used for each variety of grape. This indicates that the aroma of a wine (variety aroma) is greatly dependent on the various varieties of grapes. Winemaking bringing out the characters of grape varieties is an technique to lead to a individualization of the wine which reflected the climate and natural features of a region. It is also a field of research that has received worldwide attention. In recent years, such knowledge has been applied to the Koshu variety in Japan, leading to the creation of a new type of Koshu wine having a characteristic 3-mercaptohexan-1-ol variety aroma (see Non-patent Documents 1 and 2).

3-Mercaptohexanol is a thiol compound comprising an SH group in its molecular structure. The threshold value is extremely low (threshold value 60 ng/L). It imparts grapefruit and passion fruit nuances to wine. In individual grapes, 3-mercaptohexan-1-ol forms the conjugate *S*-(3-hexan-1-ol)glutathione (hereinafter may be referred to 3MH-*S*-GSH) with glutathione (see Non-patent Document 3), which is then converted by grape enzymes to a cysteine conjugate, *S*-(3-hexan-1-ol)-L-cysteine (hereinafter may be referred to 3MH-*S*-Cys) (see Non-patent Document 4). These then become precursors; during fermentation, the action of a beta-lyase-like enzyme of yeast releases the 3-mercaptohexan-1-ol into the wine. In recent years, an academic theory that *S*-(3-hexan-1-ol)glutathione is taken directly into yeast and converted to 3-mercaptohexan-1-ol has also been proposed (see Non-patent Document 5).

A portion of the 3-mercaptohexan-1-ol that is released becomes 3-mercaptohexyl acetate, an acetic acid ester, through the action of enzymes such as alcohol acetyltransferase derived from yeast. The 3-mercaptohexyl acetate imparts nuances of boxwood and *Cytisus scoparius,* and in wines, is known to be one of the fruity aromas of Sauvignon blanc wine. With a threshold value of 4 ng/L, it is a substance that contributes greatly to aroma. Increasing the quantity of 3-mercaptohexan-1-ol released generally increases the quantity of 3-mercaptohexyl acetate. The concentration of *S*-(3-hexan-1-ol)-L-cysteine in the skin of the Sauvignon blanc grape is more than eight times that in the juice of the grape. However, it has been reported that when the weight distribution in the tissue of the individual grape is taken into account, *S*-(3-hexan-1-ol)-L-cysteine is evenly distributed in the grape juice and skin (see Non-patent Document 6). The distribution of *S*-(3-hexan-1-ol)glutathione in individual grapes has not been reported.

The effects of winemaking procedures (see Non-patent Document 7), the yeast employed, sulfurous acid and oxygen (see Non-patent Document 8), and storage condition and duration (see Non-patent Document 9) have been examined as factors affecting the content of 3-mercaptohexan-1-ol in wine. That is, a shift of the *S*-(3-hexan-1-ol)-L-cysteine included in individual grapes into grape juice is known to be promoted by skin contact or pressure control during pressing. The use of VL-3 yeast (made by Laffort) is known to have the effect of releasing 3-mercaptohexan-1-ol. The interposition of oxygen and consumption of sulfurous acid are known to promote the degradation of 3-mercaptohexan-1-ol. And 3-mercaptohexyl acetate is known to decrease in wine in about six months, regardless of whether a cork or screw cap is employed. A group in Australia has reported that the release of 3-mercaptohexan-1-ol was surprisingly increased by cloning from *E. coli* a tryptophanase gene tnaA, which has cysteine-*beta*-lyase activity, and incorporating it into transformed yeast (see Non-patent Document 10).

The quantity of *S*-(3-hexan-1-ol)-L-cysteine has been reported to increase when grapes are infected with *Botrytis cinerea* (see Non-patent Documents 11 and 12). This is also reflected in wine; wine that is made from grapes infected with *Botrytis cinerea* have a greater 3-mercaptohexan-1-ol content than common wines (see Non-patent Document 13). Thus, know-how such as how to harvest in a state in which large quantities of precursors are present in the grapes, efficient extraction from the grapes, enhancing conversion efficiency by adjusting fermentation conditions, and long-term storage in bottles is important to winemaking utilizing the fruity aroma of 3-mercaptohexan-1-ol and the like.

Various methods have been attempted to obtain grape juice containing more *S*-(3-hexan-1-ol)-L-cysteine in this manner. However, in the skin contact method, in which grape skins are macerated in grape juice and grape skin compounds are extracted, there is a problem in that almost no osmotic pressure difference exists. Efficient extraction is not readily achieved due to a wealth of components, such as sugars and organic acids, which are present in the grape juice. Infecting grapes with *Botrytis cinerea* requires natural conditions consisting of a highly humid morning followed by a dry afternoon with sunshine. The variety of grape being infected must also have a thin skin. Such natural conditions are difficult to control artificially and the varieties of grape are limited.

Additionally, methods of extracting useful substances other than 3-mercaptohexan-1-ol precursors from grape skins have been disclosed in the form of a method of manufacturing proanthocyanidin by extraction with water at 70°C or higher from grape skins or seeds (see Patent Reference 1) and a method of manufacturing natural antioxidants by extraction with water or an ethanol-water solution at 20 to 40°C from the skins of pressed grape pomace (see Patent Reference 2). However, there have been no reports of extraction of the precursors of 3-mercaptohexan-1-ol from grape skins with water.

Further, in recent years, the demand for non-alcoholic beverages has increased. Numerous non-alcoholic beers have appeared on the market. No non-alcoholic wine has yet appeared on the market, and few such products have been developed. No wine-flavored soft drink referred to as non-alcoholic wine is known.

In the research on the olfaction, it has been revealed that human being has two routes of sensing smell, orthonasal and retronasal. The former is the route from the tip of a nose to a nostril through which odor is carried by expiration. The latter is the route from a throat to a nose when having food in a mouth. The retronasal olfaction is called as retronasal aroma and it has been said that when expressed as "tasty" or "delicious" in having food, almost all of them are derived from the retronasal aroma (see non-patent document 14). The retronasal aroma includes "retro-aromatic effect" generated by various enzymes in saliva when having food in a mouth. The "retro-aromatic effect" contributes to afteraroma of food because it requires a few seconds of reaction time from when having food in a mouth to generation of aroma. It is assumed that "retro-aromatic effect" potentially provides an opportunity of memorizing a food since it provides experience of surprise to a person having food in a mouth by generating "retro-aromatic effect" without any intention. In this way, the retronasal aroma is very important element of food. However, it is often the case that the retronasal aroma is misunderstood as the odor being felt by a tongue but not the odor being felt by a nose. Thus the retronasal aroma is not well acknowledged and therefore, few foods have been developed by focusing the retronasal aroma, especially "retro-aromatic effect".

MAGGU M ET AL., J. AGRIC FOOD CHEM., vol.55, no.25, 2007, pages 10281-10288 discloses Saubignon Blanc must containing about 110 micrograms per litre of 3MH-S-Cys. MURAT ML ET AL., J. AGRIC. FOOD CHEM., vol. 49, no. LL, 2001, pages 5412-5417 discloses the result of assessing the aromatic potential of Cabernet Sauvignon and Merlot Musts used to produce rose wine by assaying the cysteinylated precursor of 3-mercaptohexan-1-ol.

JP2000-069945 A discloses a grape skin seed extraction extract combination beverage containing crude extract and sugar of a grape skin seed containing polyphenol. DATABASE WPI Week 199115 Thomson Scientific, London, GB; AN 1991-108097 SU 1 584 888 A, 15 August 1990 discloses the preparation of a beverage from fruit juice, in particular grape juice, by fermentation with L. acidophilus.

[Patent Documents]

[Patent Document 1] Japanese Unexamined Patent Publication (KOKAI) Heisei No. 3-200781
[Patent Document 2] Japanese Unexamined Patent Publication (KOKAI) Heisei No. 7-228868

[Non-patent Documents]

[Non-patent Document 1] Journal of ASEV Japan, 15(3): 109-110 (2004).
[Non-patent Document 2] Bioscience and Industry, 64(4): 36-37 (2006).
[Non-patent Document 3] J. Agric. Food Chem., 2002, 50, 4076-4079.
[Non-patent Document 4] J. Agric. Food Chem., 1998b, 46, 5215-5219 .
[Non-patent Document 5] J. Agric. Feed Chem., 2008, 56, 9230-9235.
[Non-patent Document 6] Am. J. Enol. Vitic., 53: 2(2002).
[Non-patent Document 7] J. Agric. Food Chem., 2007, 55, 10281-10288.
[Non-patent Document 8] Am. J. Enol. Vitic., 2000, 51, 178-181.
[Non-patent Document 9] 8th International Symposium of Oenology-Bordeaux 2007, pp. 240.
[Non-patent Document 10] Yeast, 2007, 24(7), 561-574.
[Non-patent Document 11] J. Agric. Food Chem., 2007, 55, 1437-1444.
[Non-patent Document 12] J. Chromatogr. A, 2008, 1183, 150-157.
[Non-patent Document 13] J. Agric. Food Chem., 2006, 54, 7251-7255.
[Non-patent Document 14] Kagaku to Seibutsu (Chemistry and Biology) Vol. 45, No.8, 2007, 546-569

**[Summary of the Invention]**

**[Problem to Be Solved by the Invention]**

Accordingly, the first object of the present invention is to provide a method for manufacturing a wine-flavored soft drink having both an excellent fruity aroma and a fruity aroma afteraroma once swallowed.

**[Means of Solving the Problems]**

To achieve the above objects, the present inventors conducted extensive research, resulting in the discovery that a grape skin extract prepared under specific conditions contained large quantities of 3-mercaptohexan-1-ol precursors, and that using this grape skin extract, it was possible to provide liquors with good 3-mercaptohexan-1-ol aroma and soft drinks having an excellent fruity aroma and a fruity aroma afteraroma once swallowed. The present invention was devised on that basis.

The present invention is as set forth below.

[1]A method of preparation of a soft drink, comprising:

adding a lactic acid bacterium to an aqueous solution containing a grape skin extract comprising 50 nM or more of *S*-(3-hexan-1-ol)glutathione based on a Brix 20 percent conversion;
inducing fermentation by the lactic acid bacterium to convert at least a portion of the *S*-(3-hexan-1-ol)glutathione to *S*-(3-hexan-1-ol)-L-cysteine to obtain a fermentation broth comprising 50 nM or more of *S*-(3-hexan-1-ol)-L-cysteine based on a Brix 20 percent conversion; and
employing the fermentation broth as at least some portion of a starting material to obtain a soft drink containing 50 to 600 nM of *S*-(3-hexan-1-ol)-L-cysteine.

[2] The method of preparation of a soft drink according to [1], wherein the soft drink comprises 1 to 100 nM of either 3-mercaptohexan-1-ol or3-mercaptohexyl acetate, or of the two in combination.
[3] The method of preparation of a soft drink according to [1] or [2], wherein in the fermentation, the total quantity of *S*-(3-hexan-1-ol)glutathione is converted to *S*-(3-hexan-1-ol)-L-cysteine so that a soft drink essentially containing no *S*-(3-hexan-1-ol)glutathione is prepared.
[4] The method of preparation of a soft drink according to any one of [1] to [3], wherein the fermentation is conducted so that the soft drink with an ethanol content of less than 1 percent is obtained.
[5] The method of preparation of a soft drink according to any one of [1] to [4], wherein the lactic acid bacterium is *Lactobacillus mali, Lactobacillus plantarum,* or *Lactobacillus pentosus.*
[6] The method of preparation of a soft drink according to any one of [1] to [5], in the step of employing the fermentation broth, the fermentation broth is mixed with water to adjust the concentration of *S*-(3-hexan-1-ol)-L-cysteine to 600 nM or lower.
[7] The method of preparation of a soft drink according to any one of [1] to [5], wherein in the step of employing the fermentation broth, the fermentation broth is mixed with a liquid sugar, an organic acid, and water to adjust the concentration of *S*-(3-hexan-1-ol)-L-cysteine to 600 nM or lower, the Brix to 1 to 20 percent, and the titratable acidity to 1 to 5 mL.
[8] The method of preparation of a soft drink according to any one of [5] to [5], wherein in the step of employing the fermentation broth, the fermentation broth is mixed with fruit juice to adjust the concentration of *S*-(3-hexan-1-ol)-L-cysteine to 600 nM or lower, the Brix to 1 to 20 percent, and the titratable acidity to 1 to 5 mL.

**[Effects of the Invention]**

Using the method for manufacturing a soft drink of the present invention, it is possible to reliably manufacture fruit liquors, particularly wines, with individuality in the form of good 3-mercaptohexan-1-ol aroma imparting grapefruit and passion fruit nuances. Further, using the method for manufacturing a soft drink of the present invention, it is possible to provide a soft drink with a good fruity aroma and a fruity aroma afteraroma once swallowed.

**[Brief Description of the Figures]**

Figs. 1a and 1b are drawings comparing the 3-mercaptohexan-1-ol precursor extraction rates of frozen or refrigerated grape skins (Chardonnay variety).

**[Modes of Carrying Out the Invention]**

< method for manufacturing a soft drink>

The method for manufacturing a soft drink of the present invention will be described in detail below.

The grape skin extract has a 3-mercaptohexan-1-ol precursor content of 500 nM (corresponding to about 200 ppb) or more based on a Brix 20 percent conversion, and is a good fermentation starting material for fruit liquors having good 3-mercaptohexan-1-ol aroma. It can also be employed as a starting material for the soft drink of the present invention. In the present invention, the Brix (%) refers to a value denoting the soluble solids as measured with a sugar refractometer. It indicates the concentration of soluble solids in grape skin extract as a weight percentage. The 3-mercaptohexan-1-ol precursor concentration based on a Brix 20 percent conversion means that the concentration of 3-mercaptohexan-1-ol precursors in the grape skin extract obtained is a 3-mercaptohexan-1-ol precursor concentration of Brix 20 percent when converted based on the Brix concentration of the same extract.

For example, when the grape skin extract is Brix A percent and the 3-mercaptohexan-1-ol precursor concentration of the solution is B nM (ppb), the 3-mercaptohexan-1-ol precursor concentration C nM (ppb) as converted to Brix 20 percent can be calculated by the following equation:

$$C = B \times 20/A$$

The grape skin extract is manufactured by macerating grape skins in a quantity of water that is 0.5 to 3-fold that of the wet weight of the grape skins, maintaining them at 0 to 20°C for 0.5 to 96 hours, extracting the 3-mercaptohexan-1-ol precursors, conducting solid-liquid separation, and removing the grape skins to obtain the grape skin extract. As needed, concentration can be conducted by reduced pressure concentration, membrane processing, or the like. The quantity of water in which the grape skins are macerated is suitably 0.5 to 3-fold the wet weight of the grape skins. At greater than 3-fold, the concentration of 3-mercaptohexan-1-ol precursors and sugars decreases, precluding use as is as a fermentation starting material and resulting in a relative increase in the total polyphenol concentration. At less than 0.5-fold, the extraction and solid-liquid separation operations become difficult.

To enhance extraction efficiency and the solid-liquid separation operation, an enzymatic agent having enzymatic activity such as pectinase can be employed in maceration. Examples of commercial enzymatic agents are sucrase (made by Sankyo); pectinase G, pectinase PL, nurase F, pectinase PL, and pectinase G (made by Amano Enzyme); LAFASE FRUIT and LAFAZYM PRESS (made by LAFFORT); SCOTTZYME BG, SCOTTZYME CINFREE, SCOTTZYME HC, SCOTTZYME KS, and SCOTTZYME PEC5L (made by Scott Laboratories); and LALLZYME EXV, LALLZYME EXV, and LALLZYME BETA (made by LALLEMAND). There is no specific limitation. The quantity of enzyme employed depends on the activity of the enzyme. The use of 10 to 500 ppm under the above maceration conditions is adequate. To the same end, macerating the grape skins in water following freezing increases the extraction efficiency of 3-mercaptohexan-1-ol precursors and shortens the maceration time.

The temperature at which the grape skins are macerated and the 3-mercaptohexan-1-ol precursors are extracted is suitably 0 to 20°C. At 0°C and above, 3-mercaptohexan-1-ol precursors can be efficiently extracted. At below 0°C, freezing occurs during maceration, and extraction and the solid-liquid separation operation become difficult. At greater than 20°C, from the perspective of flavor and fermentation characteristics, the total quantity of polyphenol extracted, which is a negative factor, ends up undergoing a relative increase. When the pH during extraction falls within a range of pH 2 to 11, there is almost no variation in the extraction rate due to pH. Thus, no specific pH adjustment is required. When the total quantity of polyphenol increases, marked deterioration in flavor in the form of astringency, bitterness, and the like and deterioration in fermentation properties are observed. Thus, the extraction conditions are determined so that the total polyphenol concentration in the grape skin extract is desirably kept to 6,000 ppm or lower, preferably 2,000 ppm or lower, more preferably 600 ppm or lower based on a Brix 20 percent conversion. Although depending on conditions such as the quantity and temperature of the water employed in maceration and the stirring rate, an extraction time falling within a range of 0.5 to 96 hours is adequate. The concentration of the 3-MH precursors extracted can be measured timely and the end time of the extraction operation can be determined based on the results. The end time of the extraction operation can be the point at which the concentration measured becomes roughly constant.

After completing the extraction operation in this manner, a solid-liquid separation device such as a press (membrane press, gasket press), centrifuge, or filter press can be used to separate the extraction pomace and obtain clear grape skin extract. When concentrating the grape skin extract obtained, a known concentration method such as evaporation concentration (reduced pressure evaporation concentration, for example), membrane concentration, or concentration by freezing is suitably employed. When reduced pressure concentration is employed, a common reduced pressure evaporation concentration device such as a recycling (liquid film down flow type) concentration device, one-pass (spay stream thin film type) concentration device, or flash evaporator can be employed under conditions of a interior temperature of 30 to 110°C and a pressure of 0.04 to 0.4 bars. To prevent the decomposition of 3-mercaptohexan-1-ol precursor, conditions of relatively low temperature, such as a interior temperature of 30 to 60°C, are desirable. When employing membrane processing, a reverse osmosis membrane can be employed under operating conditions of a pressure of 60 to 150 bars and concentration to a degree of Brix 10 to 68 percent can be achieved. The grape skin extract employed in the production method of the present invention comprises both the grape skin extract (unconcentrated product) obtained by solid-liquid separation and the grape skin extract (concentrated) that is subsequently concentrated. Further, the grape skin extract (concentrated and unconcentrated products) obtained can be clarified, and sterilized, as needed. These processing methods are not specifically limited; known methods can be employed.

The grape skins employed in the present invention are not limited to the skins of grapes in the strict sense of the term, but may include grape seeds such as in the pressing pomace of grapes that are discharged in large quantity in the process of manufacturing grape juice and wine. The moisture content of the grape skins that are obtained in the common grape juice and wine manufacturing process, as measured by the hot drying method at ordinary pressure, is 50 to 80 percent (w/w). To prevent oxidation and to prevent the proliferation of microbes, it is desirable to employ the grape skins relatively quickly following pressing. However, the 3MH precursors in the grape skins increase following pressing when the grape skins are left standing for a prescribed period. Extraction by maceration in water subsequent to the prescribed period yields an extract of high 3MH precursor concentration and low total polyphenol concentration. maceration in water after standing for 0.5 to 24 hours following pressing is desirable. A standing time exceeding 24 hours is undesirable in that contamination by various microorganisms may occur. The standing time from pressing to maceration in water is preferably about 1 to 4 hours in light of the 3MH precursor concentration and the total polyphenol concentration in the extract obtained. The increase in the 3MH precursors in grape skins that are left standing is the result of an enzymatic reaction in the grape skins. This reaction is presumed to be stopped by the operation of deactivating the enzyme by freezing or heating, or the operation of dispersing the enzyme and substrate by maceration in water. The decrease in the total polyphenol concentration in the grape skin extract that is achieved by standing is presumed to be the result of insolubilization brought about by the oxidation polymerization of polyphenols. When the grape skins are stored for a certain period on account of operations -- by freezing, for examplethe stored material is suitably used to prevent oxidation and inhibit the proliferation of microbes. When frozen storage is employed, for the above reasons, the grape skins are desirably left standing for a prescribed period falling within the range set forth above following pressing and before freezing.

The varieties of grapes the skins of which can be employed are not specifically limited. A large number of varieties can be employed: Koshu, Kyoho, Delaware, Chardonnay, Sauvignon blanc, Sauvignon vert, Sauvignon gris, Riesling, Thompson seedless, Semillon, Viognier, Colombard, Muscat of Alexandria, Moscatel de Austria, Moscatel rosada, Pinot noir, Pinot gris, Pinot blanc, Cabernet Sauvignon, Merlot, Shiraz, Malbec, Pedro Ximenez, Torrontes Riojano, Torrontes Mendocino, Torrontes Sanjuanino, Torrontel, Chenin blanc, Ugni blanc, Cereza, Criolla, Red Grove, and the like. However, from the perspective of a high 3MH precursor content, grape skins from the Sauvignon blanc and Chardonnay varieties are desirably employed.

In the grape skin extract obtained by the above-described method, the concentration of 3MH precursors will vary based on the variety of grape skin used as starting material, the extraction conditions, whether or not concentration has been conducted, and to what degree. However, based on Brix 20 percent conversion, the concentration of 3MH-S-GSH falls within a range of 300 to 8,000 nM and the concentration of 3MH-S-Cys falls within a range of 70 nm to 11,100 nM. Further, in the grape skin extract obtained by the above-described method, the combined concentration of 3MH-S-GSH and 3MH-*S*-Cys falls within a range of 500 to 15,500 nM. However, when the 3MH-S-GSH concentration, the 3MH-*S*-Cys concentration, or the combined concentration of both falls below the above-stated range, suitable preparation is possible by varying the extraction and concentration conditions.

<Soft drink and method for manufacturing same>

The soft drink of the present invention contains 50 to 600 nM of *S*-(3-hexan-1-ol)-L-cysteine. *S*-(3-hexan-1-ol)-L-cysteine is a 3-mercaptohexan-1-ol precursor, and is converted to 3-mercaptohexan-1-ol by the action of *beta*-lyase. An enzyme containing *Beta*-lyase enzymatic activity is contained in the saliva. When a food or drink containing a trace amount of *S*-(3-hexan-1-ol)-L-cysteine is held in the mouth, the action of an enzyme containing *Beta*-lyase enzymatic activity in a few seconds produces 3-mercaptohexan-1-ol providing a retro-aromatic effect, imparting a good fruity aroma and a fruity aroma afteraroma once swallowed. And we can experience surprise by an aroma having occurred in mouths without intending. However, when the concentration of *S*-(3-hexan-1-ol)-L-cysteine is less than 50 nM, no good fruity aroma or fruity aroma afteraroma once swallowed is imparted. When the concentration of *S*-(3-hexan-1-ol)-L-cysteine exceeds 600 nM, the fruity aroma and the fruity aroma afteraroma once swallowed tend to become overpowering and ponderous. Accordingly, the drink of the present invention has an *S*-(3-hexan-1-ol)-L-cysteine content falling within the above-stated range. Within this range, the content of *S*-(3-hexan-1-ol)-L-cysteine can be suitably set based on the type of soft drink and on consumer preferences.

The soft drink of the present invention also contains 1 to 100 nM of either 3-mercaptohexan-1-ol and 3-mercaptohexyl acetate. 3-Mercaptohexanol and 3-mercaptohexyl acetate are components that impart grapefruit and passion fruit nuances to wine. Incorporating these components into the soft drink of the present invention also imparts a good fruity aroma. However, when the content of 3-mercaptohexan-1-ol or 3-mercaptohexyl acetate, or of the two combined, is less than 1 nM, this effect is difficult to achieve. When 100 nM is exceeded, the intensity of the fruity aroma that is imparted is overpowering, creating a problem by destroying the balance of aromas in the soft drink.

The soft drink of the present invention, as will be set forth further below, can be manufactured using the grape skin extract of the present invention as at least one of the starting materials.

As set forth above, $S$-(3-hexan-1-ol)glutathione is contained in the grape skin extract of the present invention. To obtain the soft drink of the present invention, the grape skin extract is fermented with a lactic acid bacterium to convert the $S$-(3-hexan-1-ol)glutathione contained in the grape skin extract to $S$-(3-hexan-1-ol)-L-cysteine. Most of the $S$-(3-hexan-1-ol)glutathione contained in the soft drink of the present invention has been converted to $S$-(3-hexan-1-ol)-L-cysteine. The soft drink of the present invention thus contains essentially no $S$-(3-hexan-1-ol)glutathione. This is desirable from the perspective of the effective use of the $S$-(3-hexan-1-ol)glutathione contained in the grape skin extract. The fact that essentially no $S$-(3-hexan-1-ol)glutathione is contained means that the concentration of $S$-(3-hexan-1-ol)glutathione in the soft drink of the present invention is 20 nM or less, for example. However, no problem presents itself in terms of the quality of the soft drink when the concentration of $S$-(3-hexan-1-ol)glutathione exceeds 20 nM. It is not intended that such drinks be excluded from the soft drink of the present invention; they fall within the scope of the present invention.

As set forth above, the soft drink of the present invention can be prepared employing grape skin extract subjected to fermentation by a lactic acid bacterium as a starting material. However, it is desirable from the perspective of providing a non-alcoholic beverage to inhibit the generation of alcohol (ethanol) in the course of fermentation by lactic acid bacteria and to limit the content of ethanol in the refreshing beverage prepared using the lactic acid fermentation broth to less than 1 percent.

In addition to containing at least a prescribed quantity of $S$-(3-hexan-1-ol)-L-cysteine, the soft drink of the present invention desirably has a Brix of 1 to 20 percent and a titratable acidity of 1 to 5 mL, for example, from the perspective of exhibiting a desirable flavor. The Brix and titratable acidity can be suitably selected based on the type of soft drink and consumer preferences. However, it is possible for the Brix and/or titratable acidity to fall outside the above-stated ranges depending on the type of soft drink and consumer preferences.

The method of preparation of the soft drink of the present invention will be described. The method of preparation of the soft drink of the present invention comprises the steps of: adding lactic acid bacteria to an aqueous solution containing a grape skin extract in a concentration of 50 nM or more based on Brix 20 percent conversion of $S$-(3-hexan-1-ol)glutathione; and inducing fermentation by the lactic acid bacteria to convert at least part of the $S$-(3-hexan-1-ol)glutathione to $S$-(3-hexan-1-ol)-L-cysteine to obtain a fermentation broth containing 50 nM or more of $S$-(3-hexan-1-ol)-L-cysteine based on a Brix 20 percent conversion. The method further comprises employing the fermentation broth as at least some portion of a starting material to obtain a soft drink containing 50 to 600 nM of $S$-(3-hexan-1-ol)-L-cysteine. In a case that the fermentation broth contains 50 to 600 nM of $S$-(3-hexan-1-ol)-L-cysteine, such the fermentation broth can be the soft drink. The grape skin extract of the present invention or the grape skin extract obtained by the manufacturing method of the present invention can be employed as is, or after having been suitably concentrated or diluted,.

The grape skin extract contained in the aqueous solution can contain $S$-(3-hexan-1-ol)-L-cysteine in addition to $S$-(3-hexan-1-ol)glutathione. When the lactic acid bacterium is added to the aqueous solution containing the grape skin extract and fermentation by the lactic acid bacterium is induced, the $S$-(3-hexan-1-ol)glutathione is converted to $S$-(3-hexan-1-ol)-L-cysteine.

The lactic acid bacterium that is employed in lactic acid bacterial fermentation desirably has a good ability to convert $S$-(3-hexan-1-ol)glutathione to $S$-(3-hexan-1-ol)-L-cysteine while producing little alcohol so as to achieve fermentation with high conversion to $S$-(3-hexan-1-ol)-L-cysteine and a low concentration of alcohol (ethanol).

Examples of such lactic acid bacteria are: *Lactobacillus mali, Lactobacillus planatarum,* and *Lactobacillus pentosus*. However, there is no intent to limit the lactic acid bacterium thereto. Other lactic acid bacteria can be suitably selected by taking into account their ability to convert to $S$-(3-hexan-1-ol)-L-cysteine and their ability to produce alcohol. Typical examples of lactic acid bacteria are given in the embodiments.

In the present invention, a solution containing grape skin extract is employed as a starting material aqueous solution for lactic acid bacterial fermentation. For example, grape skin extract alone, or grape skin extract suitably diluted with water or the like, can be employed as the solution containing grape skin extract. Alternatively, for example, a known sugar solution, fruit juice, malt juice, or a saccharified solution from a starting material in the form of grain can be mixed with to adjust the concentration of 3MH precursors for use. Still further, additives may be added to the above solution.

To promote fermentation, additives such as acids (for example, lactic acid, malic acid, and tartaric acid), salts (such as table salt, calcium hydrogenphosphate, ammonium phosphate, magnesium sulfate, calcium sulfate, potassium metabisulfite, calcium chloride, magnesium chloride, potassium nitrate, and ammonium sulfate), deacidifiers (such as calcium carbonate and ammonia), and yeast fermentation adjuvants (comprised of some or all from among inactive yeast, yeast extract, yeast cell walls, ammonium phosphate, magnesium sulfate, thiamine hydrochloride, folic acid, calcium pantothenate, niacin, and biotin) can be added.

The conditions of lactic acid bacterial fermentation are established to yield a fermentation broth containing 50 nM or more of *S*-(3-hexan-1-ol)-L-cysteine based on a Brix 20 percent conversion. This is because the target is a soft drink containing 50 to 600 nM of *S*-(3-hexan-1-ol)-L-cysteine. The other lactic acid bacteria fermentation conditions can be suitably set taking into account the lactic acid bacterium, the composition of the grape skin extract, and the like. For example, the fermentation temperature can be suitably set to fall within a range of 15 to 40°C, the fermentation period to fall within a range of 12 to 96 hours, and the initial pH to fall within a range of 3 to 10.

The lactic acid bacterial fermentation conditions desirably yield a soft drink that essentially does not contain *S*-(3-hexan-1-ol)glutathione (for example, 20 nM or less) through conversion of the entire quantity of *S*-(3-hexan-1-ol)glutathione to *S*-(3-hexan-1-ol)-L-cysteine. The conditions of lactic acid bacterial fermentation can be established taking into account dilution of a fermentation broth with water or the like so that the concentration of *S*-(3-hexan-1-ol)glutathione in the fermentation broth is 200 nM or less, for example. However, the concentration of the *S*-(3-hexan-1-ol)glutathione in the fermentation broth is also set taking into account the concentration of the *S*-(3-hexan-1-ol)glutathione in the grape skin extract.

The method of preparation of the soft drink of the present invention further comprise a step of mixing the fermentation broth obtained with a potable aqueous solution of less than 1 percent alcohol to adjust the concentration of *S*-(3-hexan-1-ol)-L-cysteine to 600 nM or lower. Examples of such the aqueous solution include water. Alternatively, Examples of such the aqueous solution include a mixture of a sugar, an organic acid, and water. In this case, a further step of mixing the fermentation broth obtained with a sugar, an organic acid, and water to adjust the concentration of *S*-(3-hexan-1-ol)-L-cysteine to 600 nM or lower, the Brix to 1 to 20 percent, and the titratable acidity to 1 to 5 mL can be incorporated. The sugar is not specifically limited other than that it be a sugar that is commonly employed in foods, such as glucose, fructose, maltose, sucrose, or lactose. The organic acid is not specifically limited other than that it be an organic acid that is employed in foods, such as lactic acid, tartaric acid, malic acid, citric acid, succinic acid, or gluconic acid.

Alternatively, examples of the potable aqueous solution include fruit juices. In this case, a further step of mixing the fermentation both obtained with fruit juice to adjust the concentration of *S*-(3-hexan-1-ol)-L-cysteine to 600 nM or less, the Brix to 1 to 20 percent, and the titratable acidity to 1 to 5 mL can be incorporated. The fruit juice is not specifically limited other than that it be a fruit juice that is employed in drinks, such as grape juice, apple juice, citrus juice (orange, mikan (mandarin orange or tangerine), grapefruit, lemon, or lime juice or the like), pineapple juice, guava juice, banana juice, mango juice, acerola juice, papaya juice, passion fruit juice, cherry juice, persimmon juice, plum juice, apricot juice, loquat juice, peach juice, pear juice, ume juice, berry juice, kiwi fruit juice, strawberry juice, or melon juice.

In addition to water, sugar, organic acid, and fruit juice, the aroma materials, vitamins, pigments, antioxidants, sweeteners, acidifiers, emulsifiers, preservatives, seasonings, extracts, pH-adjusting agents, quality stabilizers, carbon dioxide, and the like that are commonly blended into beverages can be blended into the soft drink of the present invention.

From the perspective of imparting a fruity aroma and achieving a good aroma, the soft drink obtained by the manufacturing method of the present invention desirably contains 1 to 100 mM of either 3-mercaptohexan-1-ol or 3-mercaptohexyl acetate, or the two combined.

In the present invention, the term "3-mercaptohexan-1-ol precursor" refers to substances having the property of releasing 3-mercaptohexan-1-ol (molecular weight: 134) in the process of fermentation by yeast. Specific examples are *S*-(3-hexan-1-ol)glutathione (molecular weight: 407) and S-(3-hexan-1-ol)-L-cysteine (molecular weight 221). The quantity of the 3-mercaptohexan-1-ol precursor is obtained by measuring these two substances by the following analysis method and combining the two quantities. The molecular weight of 3-mercaptohexyl acetate is 176.

(Analysis method)

The sample was diluted to a suitable ratio with a 10 percent (v/v) methanol aqueous solution containing 0.1 percent (v/v) formic acid, the dilution was filtered with a 0.45 micrometer filter, and an LC/MS/MS system was used for quantitation. The preparations used to plot a calibration curve were obtained by organic synthesis as follows: *S*-(3-hexan-1-ol)glutathione was obtained by the method of C. P. des Gachons, T. Tominaga, et al. (J. Agric. Food Chem., 2002, 50, 4076-4079) and S-(3-hexan-1-ol)-L-cysteine was obtained by the method of C. Thibon, S. Shinkaruk, et al. (J. Chromatogr. A, 2008, 1183, 150-157).

[Equipment employed]

3200 QTRAP LC/MS/MS system (Applied Biosystems)

[LC/MS/MS conditions]

Interface: Turbo V source
Ionization mode: ESI (positive mode)
Ion source parameters: curtain gas 15 psi, collision gas 3 psi, ions spray voltage 5,500 V, temperature 700°C, ion source gas 170 ps, ion source gas 270 psi, interface heater ON, measurement mode: MRM mode
Selection ions: 3MH-S-GSH m/z 408.2 -> 162.1 (collision energy 27 V), 3MH-S-Cys m/z 222.2 -> 83.2 (collision energy 19 V)

[LC conditions]

Column: Atlantis T3, 3 micrometers, 2.1 x 150 mm (Waters)
Column temperature: 40°C
Quantity introduced: 10 microliter
Mobile phase A: water containing 0.1 percent (v/v) formic acid
Mobile phase B: acetonitrile containing 0.1 percent (v/v) formic acid
Flow rate: 0.2 mL/min
Gradient: Increased over 10 minutes from a mobile phase A and mobile phase B mixing ratio of mobile phase A: mobile phase B = 90:10 to a mobile phase A: mobile phase B = 0:100, after which returned to mobile phase A: mobile phase B = 90:10 and maintained for 5 minutes.

In the present specification, the term "total polyphenol concentration" is the value calculated by gallic acid conversion by the method of Singleton, Rossi et al. (Am. J. Agric. Enol. Vitic. 16: 144 (1965)). This method quantifies by conversion of the hydroxyl groups contained in gallic acid, so all phenolic compounds, including flavonoids and nonflavonoids (hydroxycinnamic acids and the like) are quantized. Alcohol concentration (%v/v) is measured according to gas chromatograph analysis described on pages 5-7 of alcohol component in Analytical Methods appointed by the National Tax Administration Agency (the National Tax Administration Agency Orders No.6 revised in 2007 (Heisei 19)). Titratable acidity (ml) is measured according to analysis described on pages 28-29 of total acids (free acids) in Analytical Methods appointed by the National Tax Administration Agency (the National Tax Administration Agency Orders No.6 revised in 2007 (Heisei 19)).

**[Embodiments]**

The present invention is described more specifically below through embodiments. However, the present invention is not limited to these embodiments.

Embodiment 1

Content of 3-mercaptohexan-1-ol precursors in juice and skin (juice pressing pomace) of various grapes

The various grapes listed in Table 1 were pressed in a manually operated juicer and the juice and skins (juice pressing pomace) were obtained. From the grape skins, 3-mercaptohexan-1-ol precursors were extracted by adding a 2.5-fold quantity of water (50 g) to 20 g of grape skin and soaking the grape skins at 10°C for 24 hours. The content (microgram) of 3-mercaptohexan-1-ol precursors in 100 g of juice and skin of each grape was measured. The results are given in Table 1.

[Table 1]

| Variety | Portion | S-(3-Hexan-1-ol) cysteine (A) | S-(3-Hexan-1-ol) glutathione (B) | 3-Mercaptohexan-1-ol precursors conc. {(A) + (8)} |
|---------|---------|---------------------------------|-----------------------------------|-----------------------------------------------------|
| Sauvignon blanc | Grape juice | 1 | 6.2 | 7.2 |
| | Grape juice pressing pomace | 51.6 | 86.8 | 138.4 |

(continued)

| Variety | Portion | S-(3-Hexan-1-ol) cysteine (A) | S-(3-Hexan-1-ol) glutathione (B) | 3-Mercaptohexan-1-ol precursors conc. {(A) + (8)} |
|---|---|---|---|---|
| Chardonnay | Grape juice | 0.6 | 2.9 | 3.5 |
| | Grape juice pressing pomace | 3 | 16.6 | 19.5 |
| Semillon | Grape juice | 0.5 | 1.3 | 1.8 |
| | Grape juice pressing pomace | 2 | 6.7 | 8.7 |
| Koshu | Grape juice | 1 | 3.7 | 4.7 |
| | Grape juice pressing pomace | 0.5 | 7.1 | 7.6 |

In the results, as indicated in Table 1, the grape skin contained 1.6 to 19.2 times the quantity of 3-mercaptohexan-1-ol precursors that was contained in the grape juice. Of the grapes, the Sauvignon blanc and Chardonnay varieties were found to contain the largest quantities.

Embodiment 2

The dependence of extraction of 3-mercaptohexan-1-ol precursors from grape skin (Riesling variety) on the quantity of water used in maceration Water was added in a quantity of 50 to 1,000 g (0.5 to 10-fold) per 100 g of grape skin containing 69.5 percent water (w/w) obtained by pressing grapes (Riesling variety) with a membrane press (made by Bucher Vaslin). The mixtures were soaked at 5°C for 72 hours and then pressed with a manually operated juicer to obtain grape skin extracts. The 3-mercaptohexan-1-ol precursor concentration and total polyphenol concentration of the grape skin extracts obtained were measured and calculated based on a Brix 20 percent conversion. The results are shown in Table 2.

[Table 2]

| Quantity of water (g) | S-(3-Hexan-1-ol) cysteine (A) | | S-(3-Hexan-1-ol) glutathione (B) | | 3-Mercaptohexan-1-ol precursors conc.{(A) + (B)} | | Total polyphenol concentration (ppm) |
|---|---|---|---|---|---|---|---|
| | ppb | nM | ppb | nM | ppb | nM | |
| 1000(10-fold) | 89.4 | 404.5 | 404.0 | 992.6 | 493.4 | 1397.2 | 4707.9 |
| 750(7.5-fold) | 192.9 | 872.9 | 645.3 | 1585.5 | 838.2 | 2458.4 | 6708.0 |
| 500(5-fold) | 244.0 | 1104.1 | 611.4 | 1502.2 | 855.4 | 2606.3 | 6105.0 |
| 300(3-fold) | 217.7 | 985.1 | 567.0 | 1393.1 | 784.7 | 2378.2 | 5246.5 |
| 250(2.5-fold) | 249.8 | 1130.3 | 566.2 | 1391.2 | 816.0 | 2521.5 | 5314.5 |
| 200(2-fold) | 265.8 | 1202.7 | 572.9 | 1407.6 | 838.7 | 2610.3 | 5128.4 |
| 100(1-fold) | 246.8 | 1116.7 | 597.4 | 1467.8 | 844.3 | 2584.6 | 4834.5 |
| 50(0.5-fold) | 161.3 | 729.9 | 296.3 | 728.0 | 457.5 | 1457.9 | 3235.7 |

As shown in Table 2, the 3-mercaptohexan-1-ol precursors were adequately extracted by soaking the grape skins in 0.5 to 3-fold quantities of water. Additionally, the total polyphenol concentration became relatively high when the grape skins were soaked in five-fold or greater quantities of water.

Embodiment 3

The dependence of 3-mercaptohexan-1-ol precursor extraction from grape skin (Riesling variety) on pH

Water was added in a quantity of 250 g (2.5-fold) per 100 g of grape skin containing 69.5 percent water (w/w) obtained by pressing grapes (Riesling variety) with a membrane press (made by Bucher Vaslin), after which the mixtures were adjusted to a pH ranging from 1 to 11 with sodium hydroxide and hydrochloric acid. The mixtures were soaked at 5°C for 96 hours and then pressed with a manually operated juicer to obtain grape skin extracts. The 3-mercaptohexan-1-ol precursor concentration and total polyphenol concentration of the grape skin extracts obtained were measured and calculated based on Brix 20 percent conversion. The results are shown in Table 3.

[Table 3]

| pH | S-(3-Hexan-1-ol) cysteine (A) | | S-(3-Hexan-1-ol) glutathione (B) | | 3-Mercaptohexan-1-ol precursors conc.{(A) + (B)} | | Total polyphenol concentration (ppm) |
|---|---|---|---|---|---|---|---|
| | ppb | nM | ppb | nM | ppb | nM | |
| pH1 | 285.2 | 1290.5 | 415.1 | 1019.9 | 700.2 | 2310.4 | 5317.2 |
| pH2 | 364.7 | 1650.2 | 573.8 | 1409.8 | 938.5 | 3060.1 | 5109 |
| pH3 | 378.5 | 1712.7 | 483.9 | 1188.9 | 862.3 | 2901.6 | 4705.3 |
| pH4 | 329.6 | 1491.4 | 496 | 1218.7 | 825.6 | 2710.1 | 4129.3 |
| pH5 | 376.5 | 1703.6 | 469.3 | 1153.1 | 845.9 | 2856.7 | 3651.8 |
| pH6.6 | 336.5 | 1522.6 | 423.5 | 1040.5 | 760 | 2563.2 | 2883 |
| pH8 | 365.9 | 1655.7 | 427.2 | 1049.6 | 793.1 | 2705.3 | 2959 |
| pH9 | 294.1 | 1330.8 | 403.3 | 990.9 | 697.4 | 2321.7 | 3122.5 |
| pH10 | 374.6 | 1695.0 | 454.1 | 1115.7 | 828.7 | 2810.7 | 2959.2 |
| pH11 | 385.7 | 1745.2 | 459.4 | 1128.7 | 845.1 | 2874.0 | 3929.3 |

As shown in Table 3, a pH ranging from 2 to 11 during soaking of the grape skins extracted adequate quantities of 3-mercaptohexan-1-ol precursors. The total polyphenol concentration became relatively high when the pH during soaking of the grape skins was 1.

Embodiment 4

The dependence of 3-mercaptohexan-1-ol precursor extraction from grape skin (Riesling variety) on extraction temperature

Water was added in a quantity of 250 g (2.5-fold) per 100 g of grape skin containing 69.5 percent water (w/w) obtained by pressing grapes (Riesling variety) with a membrane press (made by Bucher Vaslin). The grape skins were then soaked at a temperature ranging from 5 to 120°C for a time ranging from 2 to 48 hours and pressed with a manually operated juicer to obtain grape skin extracts. The 3-mercaptohexan-1-ol precursor concentration and total polyphenol concentration of the grape skin extracts obtained were measured and calculated based on a Brix 20 percent conversion. The results are shown in Table 4.

[Table 4]

| Period (hr) | S-(3-Hexan-1-ol) cysteine (A) | | S-(3-Hexan-1-ol) glutathione (B) | | 3-Mercaptohexan-1-ol precursors conc.{(A) + (B)} | | Total polyphenol concentration (ppm) |
|---|---|---|---|---|---|---|---|
| | ppb | nM | ppb | nM | ppb | nM | |
| 48 | 297.3 | 1345.2 | 509.3 | 1251.4 | 806.7 | 2596.6 | 3004.6 |
| 48 | 312 | 1411.8 | 493.3 | 1212.0 | 805.3 | 2623.8 | 5772 |
| 48 | 277.3 | 1254.8 | 400 | 982.8 | 677.3 | 2237.6 | 10310.9 |

(continued)

| Period (hr) | S-(3-Hexan-1-ol) cysteine (A) | | S-(3-Hexan-1-ol) glutathione (B) | | 3-Mercaptohexan-1-ol precursors conc.{(A) + (B)} | | Total polyphenol concentration (ppm) |
|---|---|---|---|---|---|---|---|
| | ppb | nM | ppb | nM | ppb | nM | |
| 48 | 273.3 | 1236.7 | 513.3 | 1261.2 | 786.7 | 2497.8 | 24035.8 |
| 2 | 289.3 | 1309.0 | 417.3 | 1025.3 | 706.7 | 2334.4 | 37273.3 |

As shown in Table 4, the extraction of 3-mercaptohexan-1-ol precursors was adequate at maceration temperatures of 5 to 20°C. Higher maceration temperatures resulted in increased total polyphenol concentration and deterioration in flavor.

Embodiment 5

Extraction of 3-mercaptohexan-1-ol precursors from grape skins (Thompson seedless variety)

Grapes (Thompson seedless variety) were pressed with a manually operated juicer, yielding 1,200 mL of juice and 800 g of skin (juice pressing pomace) with a water content of 70 percent. To the 800 g of grape skin obtained were added 2,000 g (a 2.5-fold quantity) of water and the mixtures were soaked for 24 hours at 5°C. Pressing was then conducted with a manually operated juicer and a Brix 4.8 percent grape skin extract was obtained. The grape skin extract obtained was concentrated under reduced pressure at a interior temperature of 60°C in a flash evaporator to Brix 55 percent. The 3-mercaptohexan-1-ol precursor concentration and total polyphenol concentration of the grape juice and grape skin extract obtained were measured and calculated based on a Brix 20 percent conversion. The results are given in Table 5.

[Table 5]

| Portion | S-(3-Hexan-1-ol) cysteine (A) | | S-(3-Hexan-1-ol) glutathione (B) | | 3-mercaptohexan-1-ol precursors conc. {(A) + (B)} | | Total polyphenol concentration (ppm) |
|---|---|---|---|---|---|---|---|
| | Ppb | nM | ppb | nM | ppb | nM | |
| Grape juice | Below detection limit | | Below detection limit | | Below detection limit | | 584.7 |
| Grape skin extract | 200.0 | 905.0 | 1666.7 | 4095.1 | 1866.7 | 5000.1 | 939.2 |

As shown in Table 5, the quantities of 3-mercaptohexan-1-ol precursors in the grape juice were so small as to be undetectable. The 3-mercaptohexan-1-ol precursor concentration in the grape skin extract was 5,000.1 nM (1866.7 ppb), which was quite high.

Embodiment 6

Extraction of 3-mercaptohexan-1-ol precursors from grape skins (Sauvignon blanc variety)

Grape skins with a water content of 68.6 percent (w/w) obtained by pressing grapes (Sauvignon blanc variety) with a membrane press (made by Bucher Vaslin) were placed in frozen storage for a month. A 2,500 g (2.5-fold quantity) of water was added per kg of frozen grape skin and the grape skins were soaked at 20°C for 72 hours. They were then pressed in a manually operated juicer to obtain a Brix 4 percent grape skin extract. A 500 ppm quantity of Bentonite was added to the grape skin extract obtained. The mixture was stirred for 30 minutes and then left standing at 5°C for 24 hours. The supernatant was filtered with diatomaceous earth, concentrated under reduced pressure at a interior temperature of 60°C in a flash evaporator, and concentrated to Brix 50 percent. The 3-mercaptohexan-1-ol precursor concentration and total polyphenol concentration of the grape skin extract were measured and calculated based on a Brix 20 percent conversion. As a result, the S-(3-hexan-1-ol)glutathione concentration was 4,398.0 nM (1,790 ppb) (A), and the S-(3-hexan-1-ol)-L-cysteine concentration was 11,086.0 (2,450 ppb) (B). The concentration of 3-mercaptohexan-1-ol precursors was thus 15,485.0 nM (4,240 ppb) ((A) + (B)), and the total polyphenol concentration was 1,780 ppm.

Embodiment 7

Extraction of 3-mercaptohexan-1-ol precursors from grape skins (Chardonnay variety)

Grape skins with a water content of 66.8 percent (w/w) obtained by pressing grapes (Chardonnay variety) with a membrane press (made by Bucher Vaslin) were placed in frozen storage for 30 to 50 days. A 16 t (two-fold quantity) of water was added per 8 tons of frozen grape skin and the grape skins were soaked for 3 hours while being rotated in a membrane press (made by Bucher Vaslin) at 15 to 20°C. They were then pressed to obtain a Brix 4.6 percent grape skin extract. A 500 ppm quantity of Bentonite and 1,000 ppm of polyvinyl polypyrrolidone (PVPP) were added to the grape skin extract obtained to promote settling of turbid components. The mixture was then stirred for 30 minutes and left standing at 5°C for 24 hours. The supernatant was centrifuged (4,000 rpm), sterilized by heating at 95°C, concentrated under reduced pressure at a temperature of 30 to 40°C in a vacuum thin-film circulating concentrator to Brix 50 percent. The 3-mercaptohexan-1-ol precursor concentration and total polyphenol concentration of the grape skin extract were measured and calculated based on a Brix 20 percent conversion. As a result, the *S*-(3-hexan-1-ol)glutathione concentration was 1,960.8 nM (800 ppb) (A), and the *S*-(3-hexan-1-ol)-L-cysteine concentration was 5,203.6 nM (1150 ppb) (B). The concentration of 3-mercaptohexan-1-ol precursors was thus 7,164.4 nM (1,950 ppb) ((A) + (B)), and the total polyphenol concentration was 568 ppm.

Embodiment 8

Comparing the extraction rates of 3-mercaptohexan-1-ol precursors from frozen or refrigerated grape skins (Chardonnay variety)

Some grape skins with a water content of 66.8 percent (w/w) obtained by pressing grapes (Chardonnay variety) with a membrane press (made by Bucher Vaslin) were frozen at -30°C for 24 hours and others were refrigerated at 5°C for 24 hours. A 250 g (2.5-fold quantity) of water was added per 100 g of grape skins. Soaking was conducted at 20°C for 0 hour, 1 hour, or 24 hours, after which pressing was conducted with a manually operated juicer to obtain grape skin extracts. The 3-mercaptohexan-1-ol precursor content of the grape skin extracts obtained was measured and calculated based on a Brix 20 percent conversion. The results are given in Figs. 1a and 1b.

As shown in Fig. 1, the 3-mercaptohexan-1-ol precursor concentration of the grape skin extract obtained by soaking for 24 hours the grape skins that had been treated by refrigeration was the same as the 3-mercaptohexan-1-ol precursor of the grape skin extract obtained by soaking for 1 hour the grape skins that had been treated by freezing.

Embodiment 9

Testing the 3MH precursor and total polyphenol quantities (Chardonnay variety) for various standing periods

Fresh grape skins with a water content of 70 percent that had been obtained by pressing grapes (Chardonnay variety) with a manually operated juicer were charged to a one-liter beaker and left standing at about 25°C for 0 to 4 hours. Fifty gram quantities of grape skin were collected at 0, 0.5, 1, 2, and 4 hours and charged to a 200 mL beaker. A 100 g (two-fold quantity) of water was added, soaking was conducted at 5°C for 24 hours, pressing was conducted with a manually operated juicer, and grape skin extracts that had stood for different periods were obtained. The Brix (%), 3MH precursor concentration, and total polyphenol concentration of the grape skin extracts were measured at that time. The results are given in Table 6.

[Table 6]

| Standing hours | Brix (%) | Total polyphenol concentration (ppm) | 3MH-S-Cys (nM) (a) | 3MH-S-GSH (nM) (b) | 3MH precursors conc. (nM) (a)+(b) | Total polyphenol concentration (ppm) * Brix20% conversion | 3MH-S-Cys (nM) (a) * Brix20% conversion | 3MH-S-GSH (nM) (b) * Brix20% conversion | 3MH precursors conc. (nM) (a)+(b) * Brix20% conversion |
|---|---|---|---|---|---|---|---|---|---|
| 0 | 6.8 | 273.6 | 57.1 | 239.0 | 296.1 | 804.8 | 168.0 | 702.9 | 870.9 |
| 0.5 | 6.8 | 229.0 | 163.0 | 479.2 | 642.2 | 673.6 | 479.4 | 1409.3 | 1888.8 |
| 1 | 6.8 | 243.2 | 112.1 | 391.5 | 503.6 | 715.2 | 329.7 | 1151.6 | 1481.3 |
| 2 | 6.8 | 239.7 | 193.9 | 492.6 | 686.5 | 704.9 | 570.3 | 1449.0 | 2019.2 |
| 3 | 6.9 | 239.3 | 239.8 | 522.7 | 762.5 | 693.6 | 695.1 | 1515.0 | 2210.1 |
| 4 | 6.9 | 215.7 | 304.3 | 642.8 | 947.1 | 625.3 | 882.0 | 1863.1 | 2745.1 |

As a result, increasing the standing time from 0.5 to 4 hours greatly increased the 3MH precursor concentration of the grape skin extracts obtained. The total quantity of polyphenol, a factor in blocking the growth of lactic acid bacteria and in bitterness, decreased by increasing the standing time from 0.5 to 4 hours.

Embodiment 10

Testing the upper limit of the standing time for 3MH precursors (Chardonnay variety)

Grape skins with a water content of about 67 percent that had been obtained by pressing grapes (Chardonnay variety) with a membrane press (made by Bucher Vaslin) were weighed out into 200 g quantities, charged to one-liter beakers, and prepared by standing for 0 to 2 hours at 25°C, and by standing for a total of 24 hours consisting of standing for 5 hours at about 25°C followed by standing for 19 hours at about 5°C. A 400 g (two-fold quantity) of water was added to the grape skins after 0, 0.5, 1, 2, and 24 hours had elapsed, soaking was conducted at 15°C for 1 hour, pressing was conducted with a manually operated juicer, and grape skin extracts with different standing times were obtained. The Brix (%) and 3MH precursor concentration of the grape skin extracts were measured at that time. The results are shown in Table 7.

[Table 7]

| Standing hours | Brix (%) | 3MH-S-Cys (nM) (a) | 3MH-S-GSH (nM) (b) | 3MH precursor s conc.(nM) (a)+(b) | 3MH-S-Cys(nM) (a) ∗ Brix20% conversion | 3MH-S-GSH (nM) (b) ∗ Brix20% conversion | 3MH precursor s conc.(nM)(a)+(b) ∗ Brix20% conversion |
|---|---|---|---|---|---|---|---|
| 0 | 4.1 | 112.4 | 247.5 | 360.0 | 548.5 | 1207.6 | 1756.1 |
| 0.5 | 4.2 | 242.1 | 389.7 | 631.8 | 1152.8 | 1855.7 | 3008.5 |
| 1 | 4.1 | 332.6 | 274.5 | 607.1 | 1622.3 | 1339.1 | 2961.4 |
| 2 | 4.2 | 540.7 | 283.1 | 823.8 | 2574.9 | 1348.0 | 3922.9 |
| 24 | 4.1 | 1201.4 | 295.3 | 1496.7 | 5860.3 | 1440.7 | 7301.0 |

The 3MH precursor concentration of the grape skin extracts obtained rose sharply for standing times of 0.5 to 24 hours.

Embodiment 11

Testing of the 3MH precursor and total polyphenol quantities at each standing time (Koshu variety)

Fresh grape skins with a water content of about 70 percent obtained by pressing grapes (Koshu variety) with a manually operated juicer were charged to one-liter beakers and left standing for 0 to 5 hours at about 25°C. At 0, 0.5, 1, 2, 4, and 5 hours, 50 g quantities of grape skins were collected and charged to 200 mL beakers, 100 g (two-fold quantities) of water were added, soaking was conducted at 5°C for 24 hours, pressing was conducted with a manually operated juicer, and grape skin extracts with different standing times were obtained. The Brix (%), 3MH precursor concentration, and total polyphenol concentration of the grape skin extracts were measured at that time. The results are given in Table 8.

[Table 8]

| Standing hours | Brix (%) | Total polyphenol concentration (ppm) | 3MH-$S$-Cys (nM) (a) | 3MH-$S$-GSH (nM) (b) | 3MH precursors conc.(nM) (a)+(b) | Total polyphenol concentration (ppm) $*$ Brix20% conversion | 3MH-$S$-Cys (nM) (a) $*$ Brix20% conversion | 3MH-$S$-GSH (nM) (b) $*$ Brix20% conversion | 3MH precursors conc. (nM) (a)+(b) $*$ Brix20% conversion |
|---|---|---|---|---|---|---|---|---|---|
| 0 | 6.2 | 847.9 | 52.5 | 151.3 | 203.8 | 2735.3 | 169.3 | 488.2 | 657.5 |
| 0.5 | 6 | 737.5 | 79.9 | 248.8 | 328.6 | 2458.2 | 266.2 | 829.2 | 1095.5 |
| 1 | 6 | 654.2 | 102.1 | 240.8 | 343.0 | 2180.7 | 340.5 | 802.7 | 1143.2 |
| 2 | 6 | 561.7 | 132.4 | 304.5 | 436.9 | 1872.2 | 441.2 | 1015.1 | 1456.3 |
| 4 | 5.8 | 462.2 | 178.1 | 319.2 | 497.3 | 1593.7 | 614.0 | 1100.8 | 1714.8 |
| 5 | 5.8 | 387.4 | 150.1 | 239.6 | 389.7 | 1335.8 | 517.6 | 826.1 | 1343.8 |

As a result, increasing the standing time from 0.5 to 5 hours greatly increased the concentration of 3MH precursors in the grape skin extracts obtained. Further, the total quantity of polyphenol, a factor in blocking the growth of lactic acid bacteria and in bitterness, was reduced by increasing the standing time from 0.5 to 5 hours.

Embodiment 12

Conversion 1 by various lactic acid bacteria strains in synthetic medium

A 55 g quantity of Lactobacilli MRS broth (Difco) was mixed with 1,000 mL of ion-exchanged water and sterilized in an autoclave (120°C, 15 minutes) to prepare MRS medium (pH 6.5). 3MH-S-GSH prepared by organic synthesis was dissolved therein to 1,250 nM. This mixture was then charged in 15 mL quantities to sterilized 15 mL Falcon tubes. The tubes were then inoculated at about $1.0 \times 10^6$ cfu/mL with the various strains of lactic acid bacteria indicated in Table 9, and statically cultured at 30°C for 3 days. The concentrations of the substrate in the form of 3MH-S-GSH and the product in the form of 3MH-S-Cys were analyzed by the analysis method recorded immediately above the embodiments set forth above. The results are given in Table 9.

[Table 9]

| Strain's name | Strain Vareity | 3MH-S-GSH Remaining conc. (nM) | 3MH-S-Cys Produced conc.(nM) |
|---|---|---|---|
| Vegestart (Christian Hansen) | *Lactobacillus pentosus* | 643.0 | 256.7 |
| NBRC14712 | *Lactobacillus plantarum* | 1121.5 | 56.5 |
| Viniflora plantarum (Christian Hansen) | *Lactobacillus plantarum* | 1101.9 | 55.1 |
| NBRC14713 | *Lactobacillus plantarum* | 1185.3 | 49.7 |
| NBRC101975 | *Lactobacillus plantarum* | 1158.3 | 45.0 |
| NBRC101978 | *Lactobacillus plantarum* | 1155.9 | 37.6 |
| NBRC101977 | *Lactobacillus plantarum* | 1158.3 | 37.4 |
| KK(Biotech Japan) | *Leuconostoc mesenteroides* | 1133.8 | 25.7 |
| NBRC14711 | *Lactobacillus plantarum* | 1175.5 | 18.0 |
| NBRC15891 | *Lactobacillus plantarum* | 1205.0 | 11.7 |
| NBRC101974 | *Lactobacillus plantarum* | 1195.1 | 8.9 |
| NK-2 (Biotech Japan) | *Pediococcus pentosaceus* | 1229.5 | 6.7 |

Embodiment 13

Conversion 2 by various lactic acid bacteria strains in synthetic medium

MRS medium (pH 6.5) was prepared in the same manner as in Embodiment 12, 3MH-S-GSH prepared by organic synthesis was dissolved therein to 1,000 nM. This mixture was then charged in 10 mL quantities to sterilized 15 mL Falcon tubes. The tubes were then inoculated at about $1.0 \times 10^6$ cfu/mL with the various strains of lactic acid bacteria indicated in Table 10, and statically cultured at 30°C for 3 days. The concentrations of the substrate in the form of 3MH-*S*-GSH and the product in the form of 3MH-*S*-Cys were analyzed by the same method as of Embodiment 12. The results are given in Table 10.

[Table 10]

| Strain's name | Strain Vareity | 3MH-*S*-GSH Remaining conc.(nM) | 3MH-*S*-Cys Produced conc.(nM) |
|---|---|---|---|
| NBRC3202 | *Lactobacillus delbruekii subsp. delbrueckii* | 835.0 | 77.0 |
| NBRC13953 | *Lactobacillus delbruekii subsp.bulgaricus* | 780.2 | 64.1 |
| NBRC102159 | *Lactobacillus mali* | 529.4 | 63.8 |
| THT030702(Made by THT) | *Lactobacillus plantarum* | 931.4 | 35.1 |
| NBRC13951 | *Lactobacillus acidophilus* | 973.9 | 14.0 |
| NBRC14710 | *Lactobacillus rhamnosus* | 992.6 | 7.5 |
| NBRC15886 | *Lactobacillus hilgardii* | 946.9 | 5.2 |
| NBRC15888 | *Lactobacillus kefiri* | 947.7 | 2.6 |
| NBRC3516 | *Lactobacillus fructosus* | 986.1 | 2.3 |
| NBRC102164 | *Lactobacillus acidipiscis* | 983.7 | 2.1 |
| NBRC15885 | *Lactobacillus fermentum* | 951.0 | 2.0 |
| NBRC15906 | *Lactobacillus paracasei subsp.tolerans* | 988.6 | 1.4 |
| NBRC15893 | *Lactobacillus sakei subsp.sakei* | 972.2 | 1.0 |

Embodiment 14

Conversion 1 by various lactic acid bacteria strains in grape skin extract

Grape skins with a water content of 66.8 percent obtained by pressing grapes (Chardonnay variety) with a membrane press (made by Bucher Vaslin) were placed in frozen storage for one month. A 3.0 kg (two-fold quantity) of water was added to 1.5 kg of the frozen grape skins, soaking was conducted at 20°C for 24 hours, pressing was conducted with a mechanically operated juicer, and a Brix 5 percent grape skin extract was obtained. A 500 ppm quantity of Bentonite was added to the grape skin extract obtained, the mixture was stirred for 30 minutes, and the mixture was left standing at 5°C for 24 hours. The supernatant was filtered through diatomaceous earth, concentrated under reduced pressure at a interior temperature of 60°C with a flash evaporator, and concentrated to Brix 50 percent. The 3MH precursor concentration and total polyphenol concentration of the grape skin extract was measured and calculated based on a Brix 20 percent conversion, yielding a 3MH precursor concentration of 9,014.2 nM (3MH-*S*-Cys: 2,895.8 nM, 3MH-S-GSH: 6,118.4 nM) and total polyphenol concentration of 1,414 ppm in the grape skin extract.

This grape skin extract was adjusted to Brix 20 percent as a fermentation starting material. At that time, the 3MH precursor content in the fermentation starting material was 9,014.2 nM (3MH-S-Cys: 2,895.8 nM, 3MH-S-GSH: 6,118.4 nM) and the total polyphenol concentration was 1,414 ppm. To this were added 100 mg/L of the fermentation adjuvant Fermaid K (Lallemand) and 1 g/L of ammonium dihydrogen phosphate. The mixture was measured out in 100 mL quantities and charged to 180 mL glass containers. At the time, the pH was 4.4. About 1.0 x $10^7$ cfu/mL of the various lactic acid bacteria indicated in Table 11 were added and the mixture was statically cultured at 20°C for 2 days. Following culturing, the concentrations of the substrate in the form of 3MH-*S*-GSH and the product in the form of 3MH-*S*-Cys were analyzed by the same method as in Embodiment 12. The amount of 3MH-*S*-Cys produced was calculated by subtracting the concentration of 3MH-*S*-Cys in the fermentation starting material prior to culturing from the 3MH-*S*-Cys concentration in the fermentation broth following culturing. The results are given in Table 11.

[Table 11]

| Strain's name | Strain Vareity | Alcohol conc. (%v/v) | 3MH-*S*-GSH (nM) | 3MH-*S*-Cys (nM) | 3MH-*S*-Cys produced conc. (nM) |
|---|---|---|---|---|---|
| NBRC101978 | *Lactobacillus plantarum* | 0.03 | 1753.3 | 3764.6 | 868.8 |
| Viniflora plantarum (Christian Hansen) | *Lactobacillus plantarum* | 0.03 | 2765.5 | 3695.9 | 800.1 |
| NBRC101977 | *Lactobacillus plantarum* | 0.03 | 1744.2 | 3666.4 | 770.6 |

Embodiment 15

Conversion 2 by various lactic acid bacteria strains in grape skin extract

A grape skin extract made in Embodiment7 was adjusted to about Brix 20 percent (pH 4.2) and employed as a fermentation starting material. At the time, the concentration of 3MH precursors contained in the fermentation starting water was 7,164.4 nM (3MH-*S*-Cys: 5,203.6 nM, 3MH-*S*-GSH: 1,960.8 nM) and the total polyphenol concentration was 568 ppm. The fermentation starting material was measured out into 300 mL quantities and charged to 360 mL glass containers. The lactic acid bacteria indicated in Table 12 were added in quantities of about 1.0 x $10^7$ cfu/mL and the mixture was statically cultured at 30°C for 2 days. Following culturing, the concentrations of the substrate in the form of 3MH-*S*-GSH and the product in the form of 3MH-*S*-Cys were analyzed by the same method as in Embodiment 12. The amount of 3MH-*S*-Cys produced was calculated by subtracting the concentration of 3MH-*S*-Cys in the fermentation starting material prior to culturing from the 3MH-*S*-Cys concentration in the fermentation broth following culturing. The results are given in Table 12.

[Table 12]

| Strain's name | Strain Vareity | Alcohol conc. (%v/v) | 3MH-*S*-GSH (nM) | 3MH-*S*-Cys (nM) | 3MH-*S*-Cys produced conc. (nM) |
|---|---|---|---|---|---|
| NBRC15886 | *Lactobacillus hilgardii* | 0.03 | 298.2 | 6425.7 | 1221.7 |
| THT030702 (Made by THT) | *Lactobacillus plantarum* | 0.03 | 21.7 | 6199.5 | 995.5 |
| NBRC102159 | *Lactobacillus mali* | 0.03 | 259.0 | 5475.5 | 271.5 |
| NBRC3202 | *Lactobacillus delbruekii subsp. delbrueckii* | 0.03 | 1982.1 | 5294.5 | 90.5 |

Embodiment 16

Conversion over time by *Viniflora plantarum* (Christian Hansen) in grape skin extract

In the same manner as in Embodiment 15, grape skins were extracted in water and concentrated to obtain a grape skin extract, which was then adjusted to Brix 22 percent (pH 4.2) to obtain a fermentation starting material. At that time, the concentration of 3MH precursors in the fermentation starting material was 8,028.1 nM (3MH-*S*-Cys: 6,244.3 nM, 3MH-*S*-GSH: 1,783.8 nM) and the total polyphenol concentration was 625 ppm. The fermentation starting material was measured out into 500 mL quantities and charged to 750 mL glass containers, 3.5 x $10^6$ cfu/mL of lactic acid bacterium (*Lactobacillus plantarum*: *Viniflora plantarum* (produced by Christian Hansen) was added, and the mixtures were statically cultured for 144 hours at 20°C. Periodic sampling was conducted and the conversion from 3MH-*S*-GSH to 3MH-*S*-Cys by the lactic acid bacterium was investigated. In the sampled fermentation broth, the concentration of the 3MH-*S*-GSH and the product 3MH-*S*-Cys were analyzed by the same method as in Embodiment 12. The quantity of 3MH-*S*-Cys produced was calculated by subtracting the concentration of 3MH-*S*-Cys in the fermentation starting material prior to culturing from the 3MH-*S*-Cys concentration in the fermentation broth following culturing. The results are given in Table 13.

[Table 13]

| Lactic acid bacterium: *L.plantarum (*Viniflora variety) | | | |
|---|---|---|---|
| Culturing time | 3MH-*S*-GSH (nM) | 3MH-*S*-Cys (nM) | 3MH-*S*-Cys Produced conc. (nM) |
| 0 | 1783.8 | 6244.3 | 0.0 |
| 24 | 1719.9 | 6018.1 | -226.2 |
| 48 | 1235.9 | 6334.8 | 90.5 |
| 96 | 742.0 | 7420.8 | 1176.5 |
| 120 | 430.0 | 7149.3 | 905.0 |
| 144 | 516.0 | 7104.1 | 859.7 |

Reference Example 1

Conversion over time by strain CY3079 in grape skin extract A 500 mL quantity of the same fermentation starting material as in Embodiment 16 was measured out into a 750 mL glass container, 1.0 x $10^6$ cfu/mL of yeast (*Saccharomyces cerevisiae*: CY3079 (made by Lallemand)) was added, and the mixture was statically cultured for 144 hours at 20°C. Periodic sampling was conducted and the conversion from 3MH-*S*-GSH to 3MH-*S*-Cys by the lactic acid bacterium was examined. In the sampled fermentation broth, the concentration of the 3MH-*S*-GSH and the product 3MH-*S*-cys were analyzed by the same method as in Embodiment 12. The results are given in Table 14. The quantity of 3MH-*S*-Cys produced was calculated by subtracting the concentration of 3MH-*S*-Cys in the fermentation starting material prior to culturing from the 3MH-*S*-Cys concentration in the fermentation broth following culturing. The results are given in Table 14.

[Table 14]

| Yeast: *S.cerevisiae* (CY3079) | | | |
|---|---|---|---|
| Culturing time | 3MH-*S*-GSH (nM) | 3MH-*S*-Cys (nM) | 3MH-*S*-Cys Produced conc. (nM) |
| 0 | 1783.8 | 6244.3 | 0.0 |
| 24 | 1479.1 | 5927.6 | -316.7 |
| 48 | 887.0 | 5927.6 | -316.7 |
| 96 | 93.6 | 511.3 | -5733.0 |
| 120 | 69.8 | 79.6 | -6164.7 |
| 144 | 69.3 | 32.3 | -6212.1 |

Embodiment 17

An examination of pH dependence

In the same manner as in Embodiment 15, grape skins were extracted with water and concentrated to obtain a grape skin extract that was then adjusted to Brix 20 percent to obtain a fermentation starting material. The concentration of the 3MH precursors in the fermentation starting material was 5,669.4 nM (3MH-*S*-Cys: 4,416.3 nM, 3MH-*S*-GSH: 1,253.1 nM) and the total polyphenol concentration was 568 ppm. The fermentation starting material was measured out in 500 mL quantities that were adjusted to a pH of from 2 to 9 with sodium hydroxide and hydrochloric acid, charged to 750 mL glass containers, inoculated with 6.0 x $10^7$ cfu/mL of lactic acid bacterium (*Lactobacillus plantarum*: *Viniflora plantarum* (produced by Christian Hansen)) at a fermentation temperature of 20°C, and statically cultured for 48 hours. Following culturing, the concentrations of the substrate 3MH-*S*-GSH and the product 3MH-*S*-Cys were analyzed by the same method as in Embodiment 12. Further, the quantity of 3MH-*S*-Cys produced was calculated by subtracting the concentration of 3MH-*S*-Cys in the fermentation starting material prior to culturing from the 3MH-*S*-Cys concentration in the fermentation broth following culturing. The results are given in Table 15.

[Table 15]

| Culturing time | 48 | 48 | 48 | 48 | 48 | 48 |
|---|---|---|---|---|---|---|
| Fermentation temp. (°C) | 20 | 20 | 20 | 20 | 20 | 20 |
| Initial pH | 2 | 3 | 4 | 5 | 7 | 9 |
| 3MH-S-GSH (nM) | 1253.1 | 1265.4 | 1181.8 | 61.7 | 0.0 | 707.6 |
| 3MH-S-Cys (nM) | 4416.3 | 4434.4 | 4705.9 | 5429.9 | 5475.1 | 4841.6 |
| 3MH-S-Cys produced conc.(nM) | 0.0 | 18.1 | 289.6 | 1013.6 | 1058.8 | 425.3 |

Embodiment 18

An examination of temperature dependence

In the same manner as in Embodiment 15, grape skins were extracted with water and concentrated to obtain a grape skin extract that was then adjusted to Brix 22 percent (pH 4.2) to obtain a fermentation starting material. The concentration of the 3MH precursors in the fermentation starting material was 6,216.5 nM (3MH-S-Cys: 4,796.4 nM, 3MH-S-GSH: 1,420.1 nM) and the total polyphenol concentration was 568 ppm. The fermentation starting material was measured out in 500 mL quantities, charged to 750 mL glass containers, inoculated with $6.0 \times 10^7$ cfu/mL of lactic acid bacterium (*Lactobacillus plantarum*: *Viniflora plantarum* (produced by Christian Hansen)) at fermentation temperatures ranging from 10 to 40°C, and statically cultured for 48 hours. Following culturing, the concentrations of the substrate 3MH-S-GSH and the product 3MH-S-Cys were analyzed by the same method as in Embodiment 12. Further, the quantity of 3MH-S-Cys produced was calculated by subtracting the concentration of 3MH-S-Cys in the fermentation starting material prior to culturing from the 3MH-S-Cys concentration in the fermentation broth following culturing. The results are given in Table 16.

[Table 16]

| Culturing time | 48 | 48 | 48 | 48 | 48 |
|---|---|---|---|---|---|
| Fermentation temp. (°C) | 10 | 15 | 20 | 30 | 40 |
| Initial pH | 4.2 | 4.2 | 4.2 | 4.2 | 4.2 |
| 3MH-S-GSH (nM) | 1420.1 | 1481.6 | 1380.8 | 15.1 | 471.7 |
| 3MH-S-Cys (nM) | 4796.4 | 5158.4 | 4977.4 | 5972.9 | 5475.1 |
| 3MH-S-Cys Produced conc. (nM) | 0.0 | 362.0 | 181.0 | 1176.5 | 678.7 |

Embodiment 19

Drink preparation and organoleptic evaluation

[Preparation of a fermentation broth]

In the same manner as in Embodiment 15, grape skins were extracted with water and concentrated to obtain a grape skin extract that was then adjusted to Brix 22 percent (pH 4.2) to obtain a fermentation starting material. The 3MH-S-Cys concentration in the fermentation starting material was 5203.6 nM, the 3MH-S-GSH concentration was 1,752.5 nM, and the total polyphenol concentration was 625 ppm. A 1,400 L quantity of the fermentation starting material was placed in a 2,000 L stainless steel tank, inoculated with about $1.0 \times 10^6$ cfu/mL of lactic acid bacterium (*Lactobacillus plantarum*: THT030702 (produced by THT)), and statically cultured for 2 days at a fermentation temperature of 30°C. A 4-liter quantity was collected, the bacteria were removed by centrifugal separation, and hot sterilization was conducted to obtain a fermentation broth. The concentration of 3MH-S-Cys in the fermentation broth at that time was 6,221.7 nM, the concentration of 3MH-S-GSH was 0 nM, and the total 3MH concentration was 445.0 nm (3MH: 436.8 nm, 3MHA: 8.2 nM). These results were attributed to the lactic acid bacterium converting all of the 3MH-S-GSH contained in the fermentation both to 3MH-S-Cys, with 3MH and 3MHA being produced from some of the 3MH precursor during the conversion process.

[Drink preparation]

The above fermentation broth was mixed with 0 to 20 v/v percent water. Liquid sugar of fructose and glucose (Fujifruct H-100 (made by Nihon Shokuhin Kako Co., Ltd.)) and high fructose liquid sugar (Fujifruct H-95) (made by Nihon Shokuhin Kako Co., Ltd.)) were added at a ratio of 1:1 to about Brix 7 percent, tartaric acid was added, and drinks with titratable acidity of about 2.2 mL were prepared. A drink not containing the fermentation broth was prepared as Comparative Example 1, and drinks containing 1 to 20 v/v percent of the fermentation broth were prepared as Embodiments 19a to 19f.

[Organoleptic evaluation]

The drinks prepared as Comparative Example 1 and Embodiments 19a to 19f were evaluated on a five-step scale by seven expert panelists as to the "intensity of the fruity aroma that strikes the nose" (evaluation item A), the "intensity of the afteraroma of the fruity intensity after swallowing" (evaluation item B), and "desirability" (evaluation item C). As a result, Embodiments 19a to 19f containing the fermentation broth were evaluated as having improved "intensity of the fruity aroma that strikes the nose" and "intensity of the afteraroma of fruity intensity after swallowing," and increased "desirability." Of these, Embodiments 19b and 19c had a good balance between fruity aroma and intensity of fruity aroma afteraroma. Embodiments 19d to 19f were evaluated as having excessively strong fruity aromas and fruity aroma afteraromas. The results are given in Table 17.

[Table 17]

| | Mixing ratio* (v/v%) | 3MH-S-Cys (nM) | 3MH-S-GSH (nM) | 3MH (nM) (A) | 3MHA (nM) (B) | Total 3MH concentration (nM) ((A)+(B)) | Items evaluated | | |
|---|---|---|---|---|---|---|---|---|---|
| | | | | | | | A | B | C |
| Comparative Example 1 | 0 | 0 | 0 | 0 | 0 | 0 | 1.0 | 1.3 | 2.0 |
| Embodiment 19a | 1 | 62 | 0 | 4.4 | 0.1 | 4.5 | 1.8 | 2.1 | 2.6 |
| Embodiment 19b | 2 | 124 | 0 | 8.7 | 0.2 | 8.9 | 2.4 | 2.7 | 3.6 |
| Embodiment 19c | 5 | 311 | 0 | 21.8 | 0.4 | 22.3 | 2.9 | 3.1 | 3.9 |
| Embodiment 19d | 10 | 622 | 0 | 43.7 | 0.8 | 44.5 | 3.5 | 3.9 | 3.4 |
| Embodiment 19e | 15 | 933 | 0 | 65.5 | 1.2 | 66.8 | 4.1 | 4.5 | 3.4 |
| Embodiment 19f | 20 | 1244 | 0 | 87.4 | 1.6 | 89.0 | 4.2 | 4.5 | 3.0 |

* Mixing ratio: Mixing ratio of grape skin extract and lactic acid fermentation broth

| | Remarks |
|---|---|
| Comparative Example 1 | Aroma or afteraroma weak or lacking |
| Embodiment 19a | Additional presence of citrus-like fruity aroma and afteraroma; flavor like that of lemon water. |
| Embodiment 19b | Presence of a good degree of tropical fruit, citrus-like fruity aroma and afteraroma; desirable. |
| Embodiment 19c | Presence of tropical fruit, grapefruit, and other citrus-like fruity aroma and afteraroma; fruity sensation spread in the mouth; delicious. |
| Embodiment 19d | Presence of fruity aroma and afteraroma of tropical fruit, citrus, and peaches; fruity sensation spread in the mouth, somewhat strong. |
| Embodiment 19e | Presence of fruity aroma and afteraroma of tropical fruit, citrus, and peaches; fruity sensation spread in the mouth, somewhat excessively strong, heavy. |
| Embodiment 19f | Presence of fruity aroma and afteraroma of tropical fruit, citrus, and peaches; fruity sensation spread in the mouth; however, excessively strong, became tedious to drink. |

Embodiment 20

Preparation and organoleptic evaluation of drinks employing grape juice

[Drink preparation]

Concentrated white grape juice (Brix 68 percent) was diluted with water and adjusted to about Brix 20 percent. It was then employed as a concentrated and reduced white grape juice drink (Comparative Example 2). At that time, the titratable acidity of the concentrated and reduced white grape juice drink was 4.8 mL. Next, 5 v/v percent of the fermentation broth employed in Embodiment 19 was blended with the concentrated and reduced white grape juice to prepare the drink (Embodiment 20) of the present invention. At that time, the Brix (%) of the drink of the present invention was about 20 percent and the titratable acidity was 4.9 mL.

[Organoleptic evaluation]

The drinks prepared in Comparative Example 2 and Embodiment 20 were evaluated on a five-step scale by seven expert panelists as to the "intensity of the fruity aroma that strikes the nose," the "intensity of the afteraroma of the fruity intensity after swallowing," and "desirability." As a result, Embodiment 20 was evaluated as having improved "intensity of the fruity aroma that strikes the nose" and "intensity of the afteraroma of fruity intensity after swallowing," and increased "desirability." The results are given in Table 18.

[Table 18]

|  | Fermentation broth blending ratio (v/v%) | 3MH-*S*-Cys (nM) | 3MH-*S*-GSH (nM) | 3MH (nM) | 3MHA (nM) | Total 3MH concentration (nM) |
|---|---|---|---|---|---|---|
| Comparative Example 1 | 0 | 20.9 | 13.4 | 0 | 0 | 0 |
| Embodiment 20 | 5 | 320.4 | 15.0 | 21.8 | 0.4 | 22.3 |

|  | Intensity of fruity aroma striking the noise | Intensity of fruity aroma and afteraroma after swallowing | Desirability evaluation | Remarks |
|---|---|---|---|---|
| Comparative Example 1 | 1.1 | 1.9 | 2.3 | No aroma or afteraroma |
| Embodiment 20 | 3.3 | 3.9 | 4.1 | Good degree of fruity aroma of citrus, tropical fruit, and the like. Presence of fruity aroma afteraroma, a fruitiness that spread in the mouth. |

Embodiment 21

An examination of the effect of the total polyphenol concentration on the 3MH concentration

A 150 g quantity of grape skin extract (Brix 50 percent) obtained by extracting grape skins with water and concentrating the extract in the same manner as in Embodiment 15 was mixed with 45 g of hydrous crystalline glucose (prepared by Nihon Shokuhin Kako). The mixture was then diluted with water to prepare 500 mL of a Brix 22 percent fermentation starting solution (pH 4.6). At the time, the 3MH precursor concentration of the fermentation starting material was 4,147.7 nM (3MH-*S*-Cys: 3,054.3 nM, 3MH-S-GSH: 1,093.4 nm) and the total polyphenol concentration was 421 ppm. Gallic acid, a type of polyphenol, was added to 100 mL quantities of the fermentation starting material to achieve total polyphenol concentrations of 421, 803, 1,222, 2,414, and 4,851 ppm. The mixtures were then transferred to 180 mL glass containers, inoculated with a lactic acid bacterium (*Lactobacillus plantarum*: THT 030702 (prepared by THT)) at about 1.0 x $10^6$ cfu/mL at a fermentation temperature of 30°C and statically cultured for two days. Following culturing, the concentrations of the substrate 3MH-*S*-GSH and the product 3MH-*S*-Cys were analyzed by the same method as in Embodiment 12. Further, the quantity of 3MH-*S*-Cys produced was calculated by subtracting the concentration of 3MH-*S*-Cys in the fermentation starting material prior to culturing from the 3MH-*S*-Cys concentration in the fermentation broth following culturing. The results are given in Table 19.

[Table 19]

| Total polyphenol concentration (ppm) | 3MH-*S*-GSH (nM) | 3MH-*S*-Cys (nM) | 3MH-*S*-Cys produced conc. (nM) |
|---|---|---|---|
| 421 | 24.3 | 3651.6 | 597.3 |
| 803 | 25.8 | 3633.5 | 579.2 |
| 1222 | 30 | 3466.1 | 411.8 |
| 2414 | 74 | 3669.7 | 615.4 |
| 4851 | 1066.3 | 3000 | -54.3 |

**[Industrial Applicability]**

According to the present invention, it is possible to obtain a grape skin extract containing a large quantity of 3-mercaptohexan-1-ol precursors. Using this as a starting material, it is possible to obtain a soft drink with fruity aroma and a good fruity aroma afteraroma once swallowed. It is further possible to subject the fermentation starting material to alcoholic fermentation and readily manufacture a fruit liquor having the aroma of 3-mercaptohexan-1-ol.

**Claims**

1.  A method of preparation of a soft drink, comprising:

    adding a lactic acid bacterium to an aqueous solution containing a grape skin extract comprising 50 nM or more of *S*-(3-hexan-1-ol)glutathione based on a Brix 20 percent conversion;
    inducing fermentation by the lactic acid bacterium to convert at least a portion of the *S*-(3-hexan-1-ol)glutathione to *S*-(3-hexan-1-ol)-L-cysteine to obtain a fermentation broth comprising 50 nM or more of *S*-(3-hexan-1-ol)-L-cysteine based on a Brix 20 percent conversion; and
    employing the fermentation broth as at least some portion of a starting material to obtain a soft drink containing 50 to 600 nM of *S*-(3-hexan-1-ol)-L-cysteine.

2.  The method of preparation of a soft drink according to claim 1, wherein the soft drink comprises 1 to 100 nM of either 3-mercaptohexan-1-ol or 3-mercaptohexyl acetate, or of the two in combination.

3.  The method of preparation of a soft drink according to claim 1 or 2, wherein in the fermentation, the total quantity of *S*-(3-hexan-1-ol)glutathione is converted to *S*-(3-hexan-1-ol)-L-cysteine so that a soft drink essentially containing no *S*-(3-hexan-1-ol)glutathione is prepared.

4.  The method of preparation of a soft drink according to any one of claims 1 to 3, wherein the fermentation is conducted so that the soft drink with an ethanol content of less than 1 percent is obtained.

5.  The method of preparation of a soft drink according to any one of claims 1 to 4, wherein the lactic acid bacterium is *Lactobacillus mali, Lactobacillus plantarum,* or *Lactobacillus pentosus.*

6. The method of preparation of a soft drink according to any one of claims 1 to 5, in the step of employing the fermentation broth, the fermentation broth is mixed with water to adjust the concentration of $S$-(3-hexan-1-ol)-L-cysteine to 600 nM or lower.

7. The method of preparation of a soft drink according to any one of claims 1 to 5, wherein in the step of employing the fermentation broth, the fermentation broth is mixed with a liquid sugar, an organic acid, and water to adjust the concentration of $S$-(3-hexan-1-ol)-L-cysteine to 600 nM or lower, the Brix to 1 to 20 percent, and the titratable acidity to 1 to 5 mL.

8. The method of preparation of a soft drink according to any one of claims 1 to 5, wherein in the step of employing the fermentation broth, the fermentation broth is mixed with fruit juice to adjust the concentration of $S$-(3-hexan-1-ol)-L-cysteine to 600 nM or lower, the Brix to 1 to 20 percent, and the titratable acidity to 1 to 5 mL.

**Patentansprüche**

1. Verfahren zur Herstellung eines Softdrinks, umfassend:

   Zufügen eines Milchsäurebakteriums zu einer wässrigen Lösung, die einen Traubenschalenextrakt enthält, der 50 nM oder mehr S-(3-Hexan-1-ol)glutathion basierend auf einem Brix 20 Prozent Umsatz enthält;
   Induzieren der Fermentation durch das Milchsäurebakterium, um mindestens einen Teil des S-(3-Hexan-1-ol)-glutathions zu S-(3-Hexan-l-ol)-L-cystein umzusetzen, um eine Fermentationsbrühe zu erhalten, die 50 nM oder mehr S-(3-Hexan-l-ol)-L-cystein enthält, basierend auf einem Brix 20 Prozent Umsatz; und
   Verwendung der Fermentationsbrühe als mindestens einen Teil eines Startmaterials, um einen Softdrink zu erhalten, der 50 bis 600 nM S-(3-Hexan-l-ol)-L-cystein enthält.

2. Verfahren zur Herstellung eines Softdrinks nach Anspruch 1, wobei der Softdrink 1 bis 100 nM von entweder 3-Mercaptohexan-1-ol oder 3-Mercaptohexylacetat enthält, oder beide in Kombination.

3. Verfahren zur Herstellung eines Softdrinks nach Anspruch 1 oder 2, wobei bei der Fermentation die Gesamtmenge an S-(3-Hexan-1-ol)glutathion zu S-(3-Hexan-l-ol)-L-cystein umgesetzt wird, so dass ein Softdrink hergestellt wird, der im Wesentlichen kein S-(3-Hexan-1-ol)glutathion enthält.

4. Verfahren zur Herstellung eines Softdrinks nach einem der Ansprüche 1 bis 3, wobei die Fermentation so durchgeführt wird, dass der Softdrink mit einem Ethanolgehalt von weniger als 1 Prozent gewonnen wird.

5. Verfahren zur Herstellung eines Softdrinks nach einem der Ansprüche 1 bis 4, wobei das Milchsäurebakterium *Lactobacillus mali, Lactobacillus plantarum* oder *Lactobacillus pentosus* ist.

6. Verfahren zur Herstellung eines Softdrinks nach einem der Ansprüche 1 bis 5, wobei, bei dem Schritt der Verwendung der Fermentationsbrühe, die Fermentationsbrühe mit Wasser gemischt wird, um die Konzentration von S-(3-Hexan-1-ol)-L-cystein auf 600 nM oder weniger einzustellen.

7. Verfahren zur Herstellung eines Softdrinks nach einem der Ansprüche 1 bis 5, wobei, bei dem Schritt der Verwendung der Fermentationsbrühe, die Fermentationsbrühe mit einem Flüssigzucker, einer organischen Säure und Wasser gemischt wird, um die Konzentration von S-(3-Hexan-1-ol)-L-cystein auf 600 nM oder weniger, den Brix auf 1 bis 20 Prozent und die titrierbare Säure auf 1 bis 5 ml einzustellen.

8. Verfahren zur Herstellung eines Softdrinks nach einem der Ansprüche 1 bis 5, wobei, bei dem Schritt der Verwendung der Fermentationsbrühe, die Fermentationsbrühe mit Fruchtsaft gemischt wird, um die Konzentration von S-(3-Hexan-l-ol)-L-cystein auf 600 nM oder weniger, den Brix auf 1 bis 20 Prozent und die titrierbare Säure auf 1 bis 5 ml einzustellen.

**Revendications**

1. Procédé de préparation d'une boisson non alcoolisée, comprenant :

l'ajout d'une bactérie lactique à une solution aqueuse contenant un extrait de peau de raisin comprenant 50 nM ou plus de S-(3-hexan-1-ol)glutathion sur la base d'une conversion Brix de 20 % ;

l'induction de la fermentation par la bactérie lactique pour convertir au moins une partie du *S*-(3-hexan-1-ol)glutathion en *S*-(3-hexan-1-ol)-L-cystéine et obtenir un bouillon de fermentation comprenant 50 nM ou plus de *S*-(3-hexan-1-ol)-L-cystéine sur la base d'une conversion Brix de 20 % ; et

l'utilisation du bouillon de fermentation comme au moins une partie de la matière première pour obtenir une boisson non alcoolisée contenant de 50 à 600 nM de *S*-(3-hexan-1-ol)-L-cystéine.

2. Procédé de préparation d'une boisson non alcoolisée selon la revendication 1, dans lequel la boisson non alcoolisée comprend de 1 à 100 nM soit de 3-mercaptohexan-1-ol, soit d'acétate de 3-mercaptohexyle, ou des deux en combinaison.

3. Procédé de préparation d'une boisson non alcoolisée selon la revendication 1 ou 2, dans lequel au cours de la fermentation, la quantité totale de *S*-(3-hexan-1-ol)glutathion est convertie en *S*-(3-hexan-1-ol)-L-cystéine de façon qu'une boisson non alcoolisée ne contenant essentiellement pas de *S*-(3-hexan-1-ol)-glutathion soit préparée.

4. Procédé de préparation d'une boisson non alcoolisée selon l'une quelconque des revendications 1 à 3, dans lequel la fermentation est menée de façon qu'une boisson non alcoolisée ayant une teneur en éthanol inférieure à 1 % soit obtenue.

5. Procédé de préparation d'une boisson non alcoolisée selon l'une quelconque des revendications 1 à 4, dans lequel la bactérie lactique est *Lactobacillus mali, Lactobacillus plantarum,* ou *Lactobacillus pentosus.*

6. Procédé de préparation d'une boisson non alcoolisée selon l'une quelconque des revendications 1 à 5, dans lequel dans l'étape d'utilisation du bouillon de fermentation, le bouillon de fermentation est mélangé à de l'eau pour ajuster la concentration de *S*-(3-hexan-1-ol)-L-cystéine à 600 nM ou moins.

7. Procédé de préparation d'une boisson non alcoolisée selon l'une quelconque des revendications 1 à 5, dans lequel dans l'étape d'utilisation du bouillon de fermentation, le bouillon de fermentation est mélangé à du sucre liquide, à un acide organique, et à de l'eau pour ajuster la concentration de *S*-(3-hexan-1-ol)-L-cystéine à 600 nM ou moins, le degré Brix à 1-20 %, et l'acidité titrable à 1-5 mL.

8. Procédé de préparation d'une boisson non alcoolisée selon l'une quelconque des revendications 1 à 5, dans lequel dans l'étape d'utilisation du bouillon de fermentation, le bouillon de fermentation est mélangé à du jus de fruit pour ajuster la concentration de *S*-(3-hexan-1-ol)-L-cystéine à 600 nM ou moins, le degré Brix à 1-20 %, et l'acidité titrable à 1-5 mL.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000069945 A
- SU 1584888 A
- JP 3200781 A
- JP 7228868 A

**Non-patent literature cited in the description**

- **MAGGU M et al.** *J. AGRIC FOOD CHEM.,* 2007, vol. 55 (25), 10281-10288
- **MURAT ML et al.** *J. AGRIC. FOOD CHEM.,* 2001, vol. 49 (LL), 5412-5417
- DATABASE. AN 1991-108097
- *Journal of ASEV Japan,* 2004, vol. 15 (3), 109-110
- *Bioscience and Industry,* 2006, vol. 64 (4), 36-37
- *J. Agric. Food Chem.,* 2002, vol. 50, 4076-4079
- *J. Agric. Food Chem.,* 1998, vol. 46, 5215-5219
- *J. Agric. Feed Chem.,* 2008, vol. 56, 9230-9235
- *Am. J. Enol. Vitic.,* 2002, vol. 53, 2
- *J. Agric. Food Chem.,* 2007, vol. 55, 10281-10288
- *Am. J. Enol. Vitic.,* 2000, vol. 51, 178-181
- *8th International Symposium of Oenology-Bordeaux,* 2007, 240
- *Yeast,* 2007, vol. 24 (7), 561-574
- *J. Agric. Food Chem.,* 2007, vol. 55, 1437-1444
- *J. Chromatogr. A,* 2008, vol. 1183, 150-157
- *J. Agric. Food Chem.,* 2006, vol. 54, 7251-7255
- *Kagaku to Seibutsu (Chemistry and Biology),* 2007, vol. 45 (8), 546-569
- **C. P. DES GACHONS ; T. TOMINAGA et al.** *J. Agric. Food Chem.,* 2002, vol. 50, 4076-4079
- **C. THIBON ; S. SHINKARUK et al.** *J. Chromatogr. A,* 2008, vol. 1183, 150-157
- **SINGLETON ; ROSSI et al.** *Am. J. Agric. Enol. Vitic.,* 1965, vol. 16, 144